(19) Europäisches Patentamt
European Patent Office
Office européen des brevets

(11) **EP 4 130 500 B1**

(12) **EUROPEAN PATENT SPECIFICATION**

(45) Date of publication and mention
of the grant of the patent:
**19.06.2024  Bulletin 2024/25**

(21) Application number: **22184326.1**

(22) Date of filing: **12.07.2022**

(51) International Patent Classification (IPC):
**F16C 33/10** (2006.01)　　　**F16C 17/02** (2006.01)
**C10M 101/00** (2006.01)

(52) Cooperative Patent Classification (CPC):
**F16C 33/109; C10M 171/02; F16C 17/02;**
C10N 2030/02; C10N 2030/06; C10N 2040/02;
F16C 2202/04; F16C 2210/04; F16C 2240/54;
F16C 2240/60; Y02T 10/86

(54) **BEARING DEVICE AND METHOD FOR DRIVING BEARING DEVICE**

LAGERVORRICHTUNG UND VERFAHREN ZUM ANTREIBEN DER LAGERVORRICHTUNG

DISPOSITIF PALIER ET PROCÉDÉ DE COMMANDE D'UN DISPOSITIF PALIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2021  JP 2021127008
03.02.2022  JP 2022015976**

(43) Date of publication of application:
**08.02.2023  Bulletin 2023/06**

(73) Proprietor: **KABUSHIKI KAISHA KOBE SEIKO
SHO (KOBE STEEL, LTD.)
Hyogo 651-8585 (JP)**

(72) Inventors:
• **TAKAGAWA, Yusaku**
**Hyogo, 651-2271 (JP)**
• **OKITA, Keisuke**
**Hyogo, 651-2271 (JP)**
• **MATSUDA, Mariko**
**Hyogo, 651-2271 (JP)**

(74) Representative: **Müller-Boré & Partner
Patentanwälte PartG mbB
Friedenheimer Brücke 21
80639 München (DE)**

(56) References cited:
**JP-A- 2017 161 003**

**Description**

BACKGROUND OF THE INVENTION

Field of Invention

The present invention relates to a bearing device and a method for driving a bearing device.

Description of the Related Art

A bearing device for a ship includes: for example, a shaft member such as a crankshaft, an intermediate shaft, a propulsion shaft, or the like; and a bearing member such as a slide bearing or the like which slidably supports the shaft member. Furthermore, lubricating oil is supplied to a gap between the shaft member and the bearing member. The lubricating oil forms an oil film between the shaft member and the bearing member to reduce frictional resistance between these members.

In a case in which formation of the oil film is sufficient, a main factor of the frictional resistance is a viscosity of the oil film, and thus low frictional resistance tends to be maintained. On the other hand, in a case in which formation of the oil film is insufficient, not only the viscosity of the oil film but also a solid contact between the shaft member and the bearing member may become a factor of the frictional resistance, and thus the frictional resistance is likely to increase. Furthermore, in the case in which formation of the oil film is insufficient, seizure is likely to occur between the shaft member and the bearing member.

As a technique for reducing the frictional resistance and the seizure of a sliding member, for example, Patent Document 1 discloses formation of a nitrogen-containing amorphous carbon film on a sliding face. Furthermore, Patent Document 2 discloses a combined sliding member having surface characteristics which enable a reduction in friction of an internal combustion engine.

Prior Art Documents

Patent Documents

Patent Document 1: Japanese Unexamined Patent Application, Publication No. 2017-025396
Patent Document 2: Japanese Unexamined Patent Application, Publication No.

SUMMARY OF THE INVENTION

However, if the film disclosed in Patent Document 1 is formed, for example, on a surface of a bearing member for a ship in a high-load environment, impurities due to damage of the film may be mixed into the lubricating oil. Furthermore, if the film is formed on a surface of a bearing member for a large ship, capital investment and cost may increase. Meanwhile, the technique disclosed in Patent Document 2 is premised on the sliding member engaging in reciprocrocal motion. Hence, if the above technique is applied to a bearing device which is premised on rotation of the shaft member, there may be a possibility that the frictional resistance and the seizure between the shaft member and the bearing member cannot be inhibited.

The present invention was made in view of the foregoing circumstances, and an object of the present invention is to provide a bearing device which enables inhibition of frictional resistance and seizure between a shaft member and a bearing member while mixture of impurities and an increase in cost are suppressed.

The problem is solved with a bearing device according to claim 1 and a method of driving a bearing device according to claim 4.

Effects of the Invention

The bearing device according to the one aspect of the present invention enables inhibition of the frictional resistance and the seizure between the shaft member and the bearing member while mixture of impurities and an increase in cost are suppressed.

BRIEF DESCRIPTION OF THE DRAWINGS

FIG. 1 is a schematic cross-sectional view illustrating a section perpendicular to a central axis of a shaft member in a bearing device according to one embodiment of the present invention.

FIG. 2 is a flowchart illustrating a method for driving a bearing device according to an other embodiment of the present invention.

FIG. 3 is a graph showing a relationship between a grit number of sandpaper with which a shaft member was polished, and an arithmetic mean roughness of the shaft member.

FIG. 4 is a graph showing a relationship between the grit number of the sandpaper with which the shaft member was polished, and a protruding peak height of the shaft member.

FIG. 5 is a graph showing a relationship between a hardness ratio of the shaft member to the bearing member, and a ratio between arithmetic mean roughnesses before and after a sliding test of each of the shaft member and the bearing member.

FIG. 6 is a graph showing a relationship between the hardness ratio of the shaft member to the bearing member, and a ratio between protruding peak heights before and after the sliding test of each of the shaft member and the bearing member.

FIG. 7 is a graph showing a relationship between a bearing characteristic number and a friction coefficient of No. 29, No. 30, No. 34, and No. 35.

FIG. 8 is a graph showing a relationship between a bearing characteristic number and a friction coefficient of No. 31, No. 32, No. 33, No. 36, No. 37, and No. 38.

FIG. 9 is a graph showing a relationship between a bearing characteristic number and a friction coefficient of No. 85 to No. 91.

DESCRIPTION OF THE PREFERRED EMBODIMENTS

Description of Embodiments of the Present Invention

Firstly, embodiments of the present invention are listed and described.

A bearing device according to one aspect of the present invention includes: a shaft member having a shaft diameter of greater than or equal to 180 mm; a bearing member which slidably supports an outer peripheral face of the shaft member, wherein the shaft -member is a crankshaft, an intermediate shaft, or a propulsion shaft for a ship, and a lubricating oil which is supplied to a gap between the outer peripheral face of the shaft member and an inner peripheral face of the bearing member and forms an oil film in the gap, wherein an arithmetic mean roughness $Ra_1$ of the outer peripheral face of the shaft member is greater than or equal to 0.05 $\mu$m and less than or equal to 0.30 $\mu$m, and a protruding peak height $Rpk_1$ of the outer peripheral face is greater than or equal to 0.04 $\mu$m and less than or equal to 0.34 $\mu$m.

In the bearing device, the arithmetic mean roughness $Ra_1$ and the protruding peak height $Rpk_1$ of the outer peripheral face of the shaft member are optimized, whereby a sliding area between the shaft member and the bearing member is easily kept in a fluid lubrication state. Thus, the bearing device enables inhibition of frictional resistance and seizure between the shaft member and the bearing member while mixture of impurities in the sliding area and an increase in cost are suppressed.

In a case in which a hardness of the shaft member is denoted by $H_1$ [HV] and a hardness of the bearing member is denoted by $H_2$ [HV], $H_1/H_2$ is preferably greater than or equal to 4.1. By thus setting $H_1/H_2$ to be greater than or equal to the lower limit, a surface roughness of the bearing member tends to be reduced. Accordingly, the frictional resistance and the seizure between the shaft member and the bearing member can be further inhibited.

In a case in which an arithmetic mean roughness of the inner peripheral face of the bearing member is denoted by $Ra_2$ [$\mu$m] and a protruding peak height of the inner peripheral face of the bearing member is denoted by $Rpk_2$ [$\mu$m], it is preferred that $Ra_2/Ra_1$ is greater than or equal to 0.26 and less than or equal to 38.0 and that $Rpk_2/Rpk_1$ is greater than or equal to 0.32 and less than or equal to 69.0. By thus controlling $Ra_2/Ra_1$ and $Rpk_2/Rpk_1$ to fall within the above ranges, the frictional resistance and the seizure between the shaft member and the bearing member are more easily inhibited.

An oil film thickness h [$\mu$m] calculated according to the following formula 1 is preferably greater than or equal to a limit oil film thickness $h_{lim}$ [$\mu$m] calculated according to the following formula 2.

$$h = 1.95R \left(\frac{\alpha \eta u}{R}\right)^{0.73} \left(\frac{w}{ER}\right)^{-0.09} \quad \cdots 1$$

$$h_{lim} = \Lambda_{lim}\sqrt{Ra_1{}^2 + Ra_2{}^2} \quad \cdots 2$$

Thus, the oil film thickness h being greater than or equal to the limit oil film thickness $h_{lim}$ facilitates keeping the sliding area in the fluid lubrication state.

A viscosity $\eta$ of the lubricating oil is preferably greater than or equal to a limit viscosity $\eta_{lim}$ [Pa·sec] of the lubricating oil, calculated according to the following formula 3.

$$\eta_{lim} = \frac{R}{\alpha u}\left(\frac{\Lambda_{lim}\sqrt{Ra_1{}^2 + Ra_2{}^2}}{1.95R}\right)^{\frac{1}{0.73}} \left(\frac{w}{ER}\right)^{\frac{0.09}{0.73}} \quad \cdots 3$$

Thus, the viscosity $\eta$ of the lubricating oil being greater than or equal to the limit viscosity $\eta_{lim}$ of the lubricating oil further facilitates keeping the sliding area in the fluid lubrication state.

A peripheral speed u of the shaft member is preferably greater than or equal to a limit peripheral speed $u_{lim}$ [m/sec] of the shaft member, calculated according to the following formula 4.

$$u_{lim} = \frac{R}{\eta \alpha}\left(\frac{w}{ER}\right)^{\frac{0.09}{0.73}} \left(\frac{\Lambda_{lim}\sqrt{Ra_1{}^2 + Ra_2{}^2}}{1.95R}\right)^{\frac{1}{0.73}} \quad \cdots 4$$

Thus, the peripheral speed u of the shaft member being greater than or equal to the limit peripheral speed $u_{lim}$ further facilitates keeping the sliding area in the fluid lubrication state.

An equivalent radius R of the shaft member and the bearing member is preferably greater than or equal to a limit equivalent radius $R_{lim}$ [m] of the shaft member and the bearing member, calculated according to the following formula 5.

$$R_{lim} = \left(\frac{1}{\eta \alpha u}\right)^{\frac{0.73}{0.36}} \left(\frac{w}{E}\right)^{\frac{0.09}{0.36}} \left(\frac{\Lambda_{lim}\sqrt{Ra_1{}^2 + Ra_2{}^2}}{1.95}\right)^{\frac{1}{0.36}} \quad \cdots 5$$

Thus, the equivalent radius R being greater than or equal to the limit equivalent radius $R_{lim}$ further facilitates keeping the sliding area in the fluid lubrication state.

The viscosity $\eta$ of the lubricating oil preferably satisfies the following formula 6.

$$0.08 \times \eta_{lim} \leq \eta < 5.20 \times \eta_{lim} \quad\quad 6$$

Thus, the viscosity $\eta$ satisfying the above formula 6 facilitates keeping the sliding area in the fluid lubrication state while optimizing the viscosity of the lubricating oil.

An other aspect of the present invention is a method for driving a bearing device including: a shaft member having a shaft diameter of greater than or equal to 180 mm; a bearing member which slidably supports an outer peripheral face of the shaft member, wherein the shaft member is a crankshaft, an intermediate shaft, or a propulsion shaft for a ship, and a lubricating oil which is supplied to a gap between the outer peripheral face of the shaft member and an inner peripheral face of the bearing member and forms an oil film in the gap, the method including: a driving step of driving by using the bearing device to rotate the shaft member, wherein an arithmetic mean roughness $Ra_1$ of the outer peripheral face of the shaft member is greater than or equal to 0.05 $\mu$m and less than or equal to 0.30 $\mu$m, and a protruding peak height $Rpk_1$ of the outer peripheral face is greater than or equal to 0.04 $\mu$m and less than or equal to 0.34 $\mu$m.

According to the method for driving a bearing device, by using the bearing device, the sliding area between the shaft member and the bearing member is easily kept in the fluid lubrication state in the driving step. Therefore, the method for driving a bearing device enables inhibition of the frictional resistance and the seizure between the shaft member and the bearing member while mixture of impurities in the sliding area and an increase in cost are suppressed.

It is to be noted that in the present invention, the "shaft diameter" means a diameter of the outer peripheral face of the shaft member, the "arithmetic mean roughness" means a value measured according to JIS-B0601 (2013), the "protruding peak height" means a value measured according to JIS-B0671-2 (2002), the "hardness" means a Vickers hardness measured according to JIS-Z2244 (2009), the "fluid lubrication state" means a state of fluid lubrication which is sorted using a Stribeck curve, the "limit oil film thickness" means a minimum oil film thickness at which the oil film can maintain the fluid lubrication state, the "limit viscosity" means a minimum viscosity of the lubricating oil at which the oil film can maintain the fluid lubrication state, the "peripheral speed of the shaft member" means a peripheral speed at the outer peripheral face of the shaft member, and the "limit peripheral speed" means a minimum peripheral speed of the shaft member at which the oil film can maintain the fluid lubrication state.

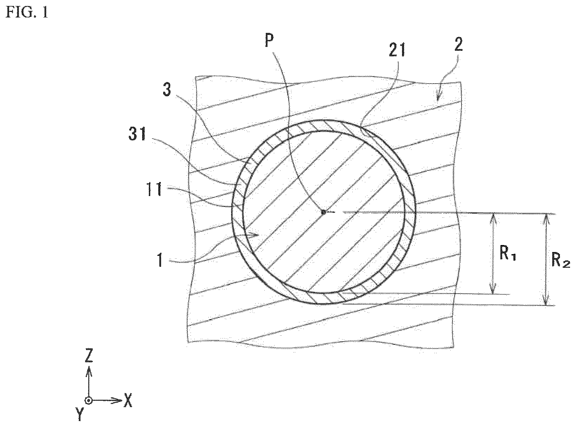

In the present invention, the "equivalent radius" means a value [m] calculated according to the following formula 7 in a case in which a radius of the outer peripheral face of the shaft member is denoted by $R_1$ [m] and a radius of the inner peripheral face of the bearing member is denoted by $R_2$ [m] (with regard to the radius $R_1$ and the radius $R_2$, refer to FIG. 1). Furthermore, the "limit equivalent radius" as referred to herein means a minimum equivalent radius at which the oil film can maintain the fluid lubrication state.

$$R = \frac{R_2 R_1}{R_2 - R_1} \quad \cdots 7$$

In the present invention, the viscosity $\eta$ of the lubricating oil means a value calculated according to the following formula 8 in a case in which a density of the lubricating oil is denoted by $\rho$ [g/cm$^3$], a kinematic viscosity of the lubricating oil at a lubricating oil temperature T [K] under atmospheric pressure is denoted by $\mu(T)$ [mm$^2$/s], and a pressure applied to the lubricating oil is denoted by P [GPa].

$$\eta = \rho\mu(T)\exp(\alpha P) \times 10^{-3} \qquad 8$$

In the above formula 8, the kinematic viscosity $\mu(T)$ is calculated according to the following formula 9 by using a viscosity-temperature characteristic number m.

$$\mu(T) = 10^{10^{(-m\log T + b)}} - 0.7 \qquad \cdots 9$$

In the above formula 9, the viscosity-temperature characteristic number m is calculated according to the following formula 10 shown in "Method of Estimating Kinematic Viscosity and Mixture Ratio" of JIS-K2283 (2000), by using a known kinematic viscosity $\mu_1$ of the lubricating oil at a temperature $T_1$ [K] and a known kinematic viscosity $\mu_2$ of the lubricating oil at a temperature $T_2$ [K] ($T_1 < T_2$).

$$m = \{\log\log(\mu_1 + 0.7) - \log\log(\mu_2 + 0.7)\} / (\log T_2 - \log T_1) \qquad 10$$

In the above formula 9, b is calculated according to the following formula 11 by using a known kinematic viscosity $\mu_3$ of the lubricating oil at a temperature $T_3$ [K].

$$b = \log\log(\mu_3 + 0.7) + m\log T_3 \qquad 11$$

In the present invention, a viscosity-pressure coefficient $\alpha$ means a value [1/GPa] calculated according to the following empirical formula 12 by using the viscosity-temperature characteristic number m and the kinematic viscosity $\mu(T)$.

$$\alpha = m\{0.1657 + 0.2332 \log \mu(T)\} \times 10 \qquad 12$$

In the present invention, an "equivalent longitudinal elastic modulus" means a value [GPa] calculated according to the following formula 13 in a case in which a Poisson's ratio of the shaft member is denoted by $v_1$, a longitudinal elastic modulus of the shaft member is denoted by $E_1$ [GPa], a Poisson's ratio of the bearing member is denoted by $v_2$, and a longitudinal elastic modulus of the bearing member is denoted by $E_2$ [GPa].

$$E = \frac{2}{\frac{(1-v_1{}^2)}{E_1} + \frac{(1-v_2{}^2)}{E_2}} \qquad \cdots 13$$

In the present invention, an "oil film parameter" means a value of A calculated according to the following formula 14 in a case in which the oil film thickness is denoted by h [μm].

$$\Lambda = \frac{h}{\sqrt{Ra_1{}^2 + Ra_2{}^2}} \qquad \cdots 14$$

Details of Embodiments of the Present Invention

Hereinafter, embodiments of the present invention are described in detail with reference to the drawings.

Bearing Device

The bearing device in FIG. 1 includes: a shaft member 1; a bearing member 2 which slidably supports an outer peripheral face 11 of the shaft member 1; and a lubricating oil 3 which is supplied to a gap between the outer peripheral face 11 of the shaft member 1 and an inner peripheral face 21 of the bearing member 2 and forms an oil film 31 in the gap.

Shaft Member

The shaft member 1 is a rotating body which rotates in a circumferential direction with respect to the bearing member 2. The shaft member 1 is exemplified by a crankshaft, an intermediate shaft, a propulsion shaft, and the like for a ship, each of which is to be disposed in a ship. Examples of a material of the shaft member 1 include carbon steel, low-alloy steel, an aluminum alloy, and the like. A central axis P of the shaft member 1 extends in a horizontal direction (a Y direction in FIG. 1).

It is preferred that a coating layer such as a lubricating film or the like is not formed on the outer peripheral face 11 of the shaft member 1. By thus not providing the coating layer on the outer peripheral face 11, mixture of impurities in a sliding area between the shaft member 1 and the bearing member 2 and an increase in cost can be inhibited.

A shaft diameter of the shaft member 1 is greater than or equal to 180 mm. The lower limit of the shaft diameter of the shaft member 1 may be 280 mm, and may be 360 mm. When the coating layer is provided on the outer peripheral face 11 of the shaft member 1 and/or the like in a case in which the shaft diameter of the shaft member 1 is greater than or equal to the lower limit value, there is a high possibility that the coating layer may be damaged, thereby generating impurities. On the other hand, the bearing device does not require the coating layer to be provided on the outer peripheral face 11; therefore, mixture of impurities in the sliding area can be inhibited.

The upper limit of the shaft diameter of the shaft member 1 is not particularly limited and is, for example, preferably 1,500 mm and more preferably 1,300 mm. When the shaft diameter of the shaft member 1 is greater than the upper limit value, the bearing device may become too large, which may be contrary to a demand for, e.g., a reduction in device size.

On the outer peripheral face 11 of the shaft member 1, a plurality of roughness projection apices may be present, wherein the roughness projection apices are calculated by the following procedure. Firstly, based on a roughness curve with a measured length of 4.0 mm, the roughness curve being measured at a cut-off value of 0.25 mm according to JIS-B0601 (2013), an average line of the roughness curve is set according to JIS-B0601 (2013). With the average line as a reference, heights of measurement points above the average line are defined as positive values, while heights of measurement points below the average line are defined as negative values. An average value of the heights of all the measurement points having positive values is denoted by Thr0. Next, of the measurement points on the roughness curve, a measurement point which is higher than measurement points adjacent thereto on both sides and has a height of greater than -Thr0 is defined as a temporary apex. Of measurement points between temporary apices adjacent to each other, a measurement point having a smallest height (having a largest depth from the temporary apices adjacent to each other) is defined as a valley. Then, for all the temporary apices, height differences between a temporary apex and each of valleys adjacent to the temporary apex on both sides are respectively determined, and apices in which the larger value of these height differences is less than $0.2 \times$ Thr0 are excluded. As a result, remaining temporary apices are determined as roughness projection apices.

In a case in which the roughness projection apices are present on the outer peripheral face 11 of the shaft member 1, the lower limit of a radius of curvature $\beta$ of roughness projections on the outer peripheral face 11 may be 55 $\mu$m, and may be 58 $\mu$m. In the shaft member 1 having a large shaft diameter of greater than or equal to the lower limit value, dimensional accuracy due to mechanical processing is likely to be insufficient; therefore, manual polishing of the outer peripheral face 11 may be desired. When the outer peripheral face 11 is manually polished, the radius of curvature $\beta$ of roughness projections is likely to increase. When the radius of curvature $\beta$ of roughness projections is large, seizure is likely to occur in the sliding area between the shaft member 1 and the bearing member 2. Even with such a configuration, the bearing device enables easy inhibition of seizure in the sliding area.

It is to be noted that the "radius of curvature of roughness projections" as referred to herein means a value calculated by the following procedure. Firstly, straight lines are drawn toward the roughness projection apex from all measurement points between the roughness projection apex and valleys adjacent to the roughness projection apex on both sides, and the measurement point for which the slope of the straight line is the largest is defined as an end of the roughness projection. The radius of curvature of each roughness projection is determined by -0.5/a, wherein a denotes a quadratic coefficient of a quadratic function obtained by approximating a roughness curve between both ends of each roughness projection by the method of least squares. A median of the radii of curvature of all the roughness projections on the roughness curve is determined as the radius of curvature of the roughness projections.

The arithmetic mean roughness $Ra_1$ of the outer peripheral face 11 of the shaft member 1 is greater than or equal to 0.05 $\mu$m and less than or equal to 0.30 $\mu$m, and the protruding peak height $Rpk_1$ of the outer peripheral face 11 is greater than or equal to 0.04 $\mu$m and less than or equal to 0.34 $\mu$m. As described above, when the outer peripheral face 11 is manually polished, the shaft member 1 is likely to have a large radius of curvature $\beta$ of roughness projections. At this time, by polishing with sandpaper having a sufficiently large grit number, the arithmetic mean roughness $Ra_1$ and the protruding peak height $Rpk_1$ can be reduced to fall within the above ranges. For example, by polishing with sandpaper having roughness of a grit number of greater than or equal to 200, the arithmetic mean roughness $Ra_1$ and the protruding peak height $Rpk_1$ can be reduced to fall within the above ranges. The grit number of the sandpaper may be greater than or equal to 500, and may be greater than or equal to 600. It is to be noted that the arithmetic mean roughness $Ra_1$ of the outer peripheral face 11 of the shaft member 1 and the protruding peak height $Rpk_1$ of the outer peripheral face 11 may be values before sliding between the shaft member 1 and the bearing member 2.

The upper limit of the arithmetic mean roughness $Ra_1$ of the outer peripheral face 11 is preferably 0.16 $\mu$m, more preferably 0.12 $\mu$m, and still more preferably 0.08 $\mu$m. When the arithmetic mean roughness $Ra_1$ of the outer peripheral face 11 is greater than the upper limit, it may be difficult to inhibit the frictional resistance and the seizure between the shaft member 1 and the bearing member 2.

The upper limit of the protruding peak height $Rpk_1$ of the outer peripheral face 11 is preferably 0.22 $\mu$m, more preferably 0.18 $\mu$m, and still more preferably 0.14 $\mu$m. When the protruding peak height $Rpk_1$ of the outer peripheral face 11 is greater than the upper limit, it may be difficult to inhibit the frictional resistance and the seizure between the shaft member 1 and the bearing member 2.

Bearing Member

The bearing member 2 is exemplified by a crank bearing, an intermediate bearing, a propulsion bearing, and the like for a ship, each of which is to be disposed in a ship. Examples of a material of the bearing member 2 include white metal, kelmet, an aluminum alloy, and the like.

The inner peripheral face 21 of the bearing member 2 surrounds the outer peripheral face 11 of the shaft member 1 along the circumferential direction. A central axis of the inner peripheral face 21 extends in the horizontal direction (the Y direction in FIG. 1). The lubricating oil 3 is supplied to the gap between the outer peripheral face 11 and the inner peripheral face 21, and the oil film 31 is formed from the lubricating oil 3. The bearing member 2 slidably supports the shaft member 1 due to thus being disposed such that the inner peripheral face 21 faces the outer peripheral face 11 with the oil film 31 interposed therebetween.

The inner peripheral face 21 is subjected to a load from the outer peripheral face 11 through the oil film 31. Therefore, the inner peripheral face 21 has a region which is subjected to the load (load distribution). The load distribution extends in the central axis direction of the inner peripheral face 21 and is formed in an arc shape in a section perpendicular to the central axis of the inner peripheral face 21. Furthermore, a range of the load distribution may fluctuate owing to rotation and vibration of the shaft member 1.

It is preferred that a coating layer such as a lubricating film or the like is not formed on the inner peripheral face 21 of the bearing member 2. By thus not providing the coating layer on the inner peripheral face 21, mixture of impurities in the sliding area between the shaft member 1 and the bearing member 2 and an increase in cost can be inhibited.

The hardness $H_1$ [HV] of the shaft member 1 is preferably higher than the hardness $H_2$ [HV] of the bearing member 2. In general, since the hardness $H_2$ of the bearing member 2 is low, it is difficult to intentionally control the surface roughness of the inner peripheral face 21 by mechanical processing and/or the like. Even in such a case, by setting the hardness $H_1$ of the shaft member 1 to be higher than the hardness $H_2$ of the bearing member 2, the inner peripheral face 21 of the bearing member 2 can be polished owing to the sliding with the shaft member 1. As a result, the surface roughness of the inner peripheral face 21 of the bearing member 2 is reduced, and thus the frictional resistance and the seizure between the outer peripheral face 11 and the inner peripheral face 21 are easily inhibited. The lower limit of a ratio ($H_1/H_2$) of the hardness $H_1$ of the shaft member 1 to the hardness $H_2$ of the bearing member 2 is preferably 4.1, more preferably 5.0, still more preferably 6.0, and particularly preferably 8.0. When the above ratio is less than the lower limit, it may be difficult to reduce the surface roughness of the inner peripheral face 21 by rotation of the shaft member 1. Conversely, the upper limit of the above ratio is not particularly limited and may be, for example, 20 in light of ease of selection of materials of the shaft member 1 and the bearing member 2, and the like.

The lower limit of a ratio ($Ra_2/Ra_1$) of the arithmetic mean roughness $Ra_2$ [$\mu$m] of the inner peripheral face 21 of the bearing member 2 to the arithmetic mean roughness $Ra_1$ [$\mu$m] of the outer peripheral face 11 of the shaft member 1 is not particularly limited and may be, for example, 0.26. Meanwhile, the upper limit of the above ratio is preferably 38.0, more preferably 37.1, still more preferably 22.6, and even more preferably 20.4. When the above ratio is greater than the upper limit, it may be difficult to inhibit the frictional resistance and the seizure between the outer peripheral face 11 and the inner peripheral face 21. It is to be noted that the above ratio may be a ratio before sliding between the shaft member 1 and the bearing member 2.

The lower limit of a ratio ($Rpk_2/Rpk_1$) of the protruding peak height $Rpk_2$ [$\mu$m] of the inner peripheral face 21 of the bearing member 2 to the protruding peak height $Rpk_1$ [$\mu$m] of the outer peripheral face 11 of the shaft member 1 is not particularly limited and may be, for example, 0.32. Meanwhile, the upper limit of the above ratio is preferably 69.0, more preferably 68.3, still more preferably 57.3, and even more preferably 27.4. When the above ratio is greater than the upper limit, it may be difficult to inhibit the frictional resistance and the seizure between the outer peripheral face 11 and the inner peripheral face 21. It is to be noted that the above ratio may be a ratio before sliding between the shaft member 1 and the bearing member 2.

Lubricating Oil

The lubricating oil 3 is exemplified by paraffin base oil and the like. By forming the oil film 31, the lubricating oil 3 facilitates maintaining the fluid lubrication state between the outer peripheral face 11 and the inner peripheral face 21.

The oil film thickness h [$\mu$m] calculated according to the following formula 1 is preferably greater than or equal to the limit oil film thickness $h_{lim}$ [$\mu$m] calculated according to the following formula 2.

$$h = 1.95R\left(\frac{\alpha\eta u}{R}\right)^{0.73}\left(\frac{w}{ER}\right)^{-0.09} \quad \cdots 1$$

$$h_{lim} = \Lambda_{lim}\sqrt{Ra_1{}^2 + Ra_2{}^2} \quad \cdots 2$$

In the above formula 1, R represents the equivalent radius [m] of the shaft member 1 and the bearing member 2, $\alpha$ represents the viscosity-pressure coefficient [1/GPa] of the lubricating oil 3, $\eta$ represents the viscosity [Pa·sec] of the lubricating oil 3, u represents the peripheral speed [m/sec] of the shaft member 1, E represents the equivalent longitudinal elastic modulus [GPa] of the shaft member 1 and the bearing member 2, and w represents a load [N/m] per unit length in an axial direction of the shaft member 1, the load being applied to the bearing member 2. Furthermore, in the above formula 2, $\Lambda_{lim}$ represents a value of a minimum oil film parameter at which the oil film 31 maintains the fluid lubrication state. It is to be noted that in the above formula 1, for example, an average value of the rotation speed during continuous rotation of the shaft member 1 can be used as the peripheral speed u. In the above formula 1, $\eta$ ($T_h$) calculated according to the above formula 8 can be used as the viscosity $\eta$ in a case in which a maximum temperature of the lubricating oil 3 during continuous rotation of the shaft member 1 is denoted by $T_h$. In the above formula 1, the load w per unit length can be determined assuming that in light of ease of calculation of the oil film thickness h, the total load of the shaft member 1 is directly applied to the inner peripheral face 21. According to this assumption, the load w per unit length can be defined as a value obtained by dividing the total load of the shaft member 1 by a width of the inner peripheral face 21 (a length in the central axis direction of the inner peripheral face 21). In the above formula 1, the value $\Lambda_{lim}$ of the minimum oil film parameter can be set to greater than or equal to 3 and less than or equal to 4 in accordance with material properties of the shaft member 1 and the bearing member 2. In particular, in a case in which the surface roughness of each of the outer peripheral face 11 of the shaft member 1 and the inner peripheral face 21 of the bearing member 2 can be regarded as following a normal distribution, the value $\Lambda_{lim}$ of the minimum oil film parameter can be set to 3. In the above formula 2, as the arithmetic mean roughness $Ra_1$ of the outer peripheral face 11 of the shaft member 1 and the arithmetic mean roughness $Ra_2$ of the inner peripheral face 21 of the bearing member 2, values before sliding between the shaft member 1 and the bearing member 2 may be used.

Owing to the oil film thickness h thus being greater than or equal to the limit oil film thickness $h_{lim}$, the solid contact between the outer peripheral face 11 and the inner peripheral face 21 is easily inhibited by the oil film 31. This facilitates maintaining the fluid lubrication state between the outer peripheral face 11 and the inner peripheral face 21.

The limit viscosity $\eta_{lim}$ [Pa·sec] of the lubricating oil 3 is determined according to the following formula 3 by modifying the above formula 1 by using the above formula 2.

$$\eta_{lim} = \frac{R}{\alpha u} \left( \frac{\Lambda_{lim}\sqrt{Ra_1{}^2 + Ra_2{}^2}}{1.95R} \right)^{\frac{1}{0.73}} \left( \frac{w}{ER} \right)^{\frac{0.09}{0.73}} \quad \cdots 3$$

The viscosity $\eta$ [Pa-sec] of the lubricating oil 3 is preferably controlled with reference to the limit viscosity $\eta_{lim}$. That is to say, the lower limit of the viscosity $\eta$ [Pa-sec] of the lubricating oil 3 is preferably $0.08 \times \eta_{lim}$, more preferably greater than $0.19 \times \eta_{lim}$, still more preferably $0.37 \times \eta_{lim}$, and even more preferably $0.47 \times \eta_{lim}$. Furthermore, the lower limit of the viscosity $\eta$ may be the limit viscosity $\eta_{lim}$. Meanwhile, the upper limit of the viscosity $\eta$ is preferably less than $5.20 \times \eta_{lim}$, more preferably $3.70 \times \eta_{lim}$, and still more preferably $1.43 \times \eta_{lim}$. When the viscosity $\eta$ is less than the lower limit, it may be difficult to maintain the fluid lubrication state between the outer peripheral face 11 and the inner peripheral face 21. Conversely, when the viscosity $\eta$ is greater than the upper limit, the viscosity $\eta$ may become excessively high, making it difficult to reduce the frictional resistance between the outer peripheral face 11 and the inner peripheral face 21.

The limit peripheral speed $u_{lim}$ [m/sec] of the shaft member 1 is determined according to the following formula 4 by modifying the above formula 1 by using the above formula 2.

$$u_{lim} = \frac{R}{\eta\alpha} \left( \frac{w}{ER} \right)^{\frac{0.09}{0.73}} \left( \frac{\Lambda_{lim}\sqrt{Ra_1{}^2 + Ra_2{}^2}}{1.95R} \right)^{\frac{1}{0.73}} \quad \cdots 4$$

The peripheral speed u [m/sec] of the shaft member 1 is preferably controlled with reference to the limit peripheral speed m,m. That is to say, the lower limit of the peripheral speed u [m/sec] of the shaft member 1 is preferably $0.29 \times u_{lim}$, more preferably $0.53 \times u_{lim}$, and still more preferably $u_{lim}$. Meanwhile, the upper limit of the peripheral speed u is not particularly limited and may be, for example, $4.94 \times u_{lim}$. When the peripheral speed u is less than the lower limit, it may be difficult to maintain the fluid lubrication state between the outer peripheral face 11 and the inner peripheral face 21.

The limit equivalent radius $R_{lim}$ [m] of the shaft member 1 and bearing member 2 is determined according to the following formula 5 by modifying the above formula 1 by using the above formula 2.

$$R_{lim} = \left( \frac{1}{\eta\alpha u} \right)^{\frac{0.73}{0.36}} \left( \frac{w}{E} \right)^{\frac{0.09}{0.36}} \left( \frac{\Lambda_{lim}\sqrt{Ra_1{}^2 + Ra_2{}^2}}{1.95} \right)^{\frac{1}{0.36}} \quad \cdots 5$$

The equivalent radius R [m] of the shaft member 1 and the bearing member 2 is preferably controlled with reference to the limit equivalent radius $R_{lim}$. That is to say, the lower limit of the equivalent radius R [m] is preferably $0.08 \times R_{lim}$, more preferably $0.27 \times R_{lim}$, and still more preferably $R_{lim}$. Meanwhile, the upper limit of the equivalent radius R is not particularly limited and may be, for example, 25.65 × $R_{lim}$ in view of, e.g., a demand for a reduction in device size. When the equivalent radius R is less than the lower limit, it may be difficult to maintain the fluid lubrication state between the outer peripheral face 11 and the inner peripheral face 21.

Advantages

In the bearing device, by optimizing the arithmetic mean roughness Rai and the protruding peak height $Rpk_1$ of the outer peripheral face 11 of the shaft member 1, the fluid lubrication state between the outer peripheral face 11 and the inner peripheral face 21 is easily maintained. Furthermore, the bearing device does not require a surface treatment layer such as a coating layer or the like to be provided on the outer peripheral face 11 and the inner peripheral face 21. Therefore, the bearing device enables inhibition of the frictional resistance and the seizure between the outer peripheral face 11 and the inner peripheral face 21, while mixture of impurities between the outer peripheral face 11 and the inner peripheral face 21 and an increase in cost are suppressed.

Method for Driving Bearing Device

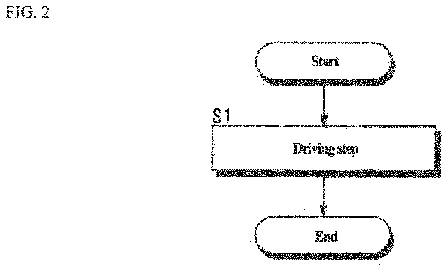

The method for driving a bearing device in FIG. 2 includes a driving step S1 of driving by using the bearing device in FIG. 1 to rotate the shaft member 1.

Driving Step

In the driving step S1, the shaft member 1 is rotated while the lubricating oil 3 is supplied to the gap between the shaft member 1 and the bearing member 2. A method for supplying the lubricating oil 3 is exemplified by a method in which a supply port for supplying the lubricating oil 3 is provided on the inner peripheral face 21 of the bearing member 2 and the lubricating oil 3 is supplied from the supply port such that the lubricating oil 3 circulates in the sliding area between the shaft member 1 and the bearing member 2. It is to be noted that the lubricating oil 3 may be dropped between the outer peripheral face 11 and the inner peripheral face 21 before the shaft member 1 is rotated.

In the driving step S1, the shaft member 1 is preferably rotated such that the oil film thickness h [μm] calculated according to the following formula 1 is greater than or equal to the limit oil film thickness $h_{lim}$ [μm] calculated according to the following formula 2.

$$h = 1.95R \left(\frac{\alpha\eta u}{R}\right)^{0.73} \left(\frac{w}{ER}\right)^{-0.09} \quad \cdots 1$$

$$h_{lim} = \Lambda_{lim}\sqrt{Ra_1{}^2 + Ra_2{}^2} \quad \cdots 2$$

By thus controlling the oil film thickness h to be greater than or equal to the limit oil film thickness $h_{lim}$, the solid contact between the outer peripheral face 11 and the inner peripheral face 21 is easily inhibited by the oil film 31.

The viscosity η of the lubricating oil 3 in the driving step S1 is preferably controlled with reference to the above-mentioned limit viscosity $\eta_{lim}$. That is to say, the lower limit of the viscosity η [Pa·sec] is preferably 0.08 × $\eta_{lim}$, more preferably greater than 0.19 × $\eta_{lim}$, still more preferably 0.37 × $\eta_{lim}$, and even more preferably 0.47 × $\eta_{lim}$. Furthermore, the lower limit of the viscosity η may be the limit viscosity $\eta_{lim}$. Meanwhile, the upper limit of the viscosity η is preferably less than 5.20 × $\eta_{lim}$, more preferably 3.70 × $\eta_{lim}$, and still more preferably 1.43 × $\eta_{lim}$. When the viscosity η is less than the lower limit, it may be difficult to maintain the fluid lubrication state between the outer peripheral face 11 and the inner peripheral face 21. Conversely, when the viscosity η is greater than the upper limit, the viscosity η may become excessively high, making it difficult to reduce the frictional resistance between the outer peripheral face 11 and the inner peripheral face 21. It is to be noted that, as referred to herein, the "viscosity η" means the viscosity η during driving of the shaft member 1, and "controlling with reference to the limit viscosity $\eta_{lim}$" means that by adjusting driving conditions such as the peripheral speed u of the shaft member 1 and the like, by selecting the lubricating oil 3, and/or the like, the viscosity η of the lubricating oil 3 in the driving step S1 is controlled with reference to the limit viscosity $\eta_{lim}$ immediately before the start of the driving step S1.

In the driving step S1, the peripheral speed u of the shaft member 1 is preferably controlled with reference to the above-mentioned limit peripheral speed $u_{lim}$. That is to say, the lower limit of the peripheral speed u [m/sec] of the shaft member 1 in the driving step S1 is preferably 0.29 × $u_{lim}$, more preferably 0.53 × $u_{lim}$, and still more preferably

$u_{lim}$. Meanwhile, the upper limit of the peripheral speed u is not particularly limited and may be, for example, $4.94 \times u_{lim}$. When the peripheral speed u is less than the lower limit, it may be difficult to maintain the fluid lubrication state between the outer peripheral face 11 and the inner peripheral face 21.

Advantages

According to the method for driving a bearing device, by using the bearing device, the fluid lubrication state between the outer peripheral face 11 and the inner peripheral face 21 is easily maintained in the driving step S1. Therefore, the method for driving a bearing device enables inhibition of the frictional resistance and the seizure between the outer peripheral face 11 and the inner peripheral face 21, while mixture of impurities between the outer peripheral face 11 and the inner peripheral face 21 and an increase in cost are suppressed.

Other Embodiments

The above-described embodiments do not limit the configuration of the present invention. Therefore, in the above-described embodiments, the components of each part of the above-described embodiments can be omitted, replaced, or added based on the description in the present specification and general technical knowledge, and such omission, replacement, or addition should be construed as falling within the scope of the present invention.
In the above-described embodiments, the central axis of the shaft member extends in the horizontal direction; however, the central axis of the shaft member may be inclined to the horizontal direction.

EXAMPLES

Hereinafter, the present invention is described in detail by way of Examples; the present invention should not be construed as being limited to description in the Examples.
In the Examples, a polishing test in which the outer peripheral face of the shaft member was manually polished and a sliding test in which the shaft member was rotated were performed.

Polishing Test

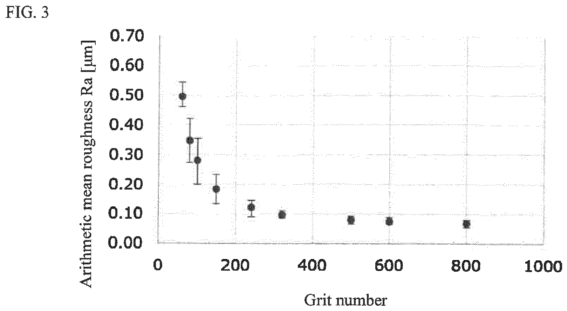

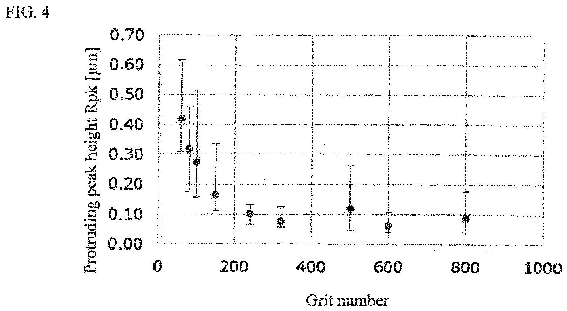

In the polishing test, the outer peripheral face of the shaft member was polished with sandpaper. As a material of the shaft member, steel corresponding to S45C as defined in JIS-G4051 (2016) was used. An outer diameter of the shaft member in a part to be polished was set to 600 mm. The polishing was repeatedly performed while the grit number of the sandpaper was gradually increased. For each grit number of the sandpaper, the arithmetic mean roughness $Ra_1$ and the protruding peak height $Rpk_1$ of the outer peripheral face after the polishing were measured using a portable surface roughness measurement instrument ("SJ-310"), available from Mitutuyo Corporation. In this measurement, four circumferential positions were decided at intervals of 90 deg along the circumferential direction of the outer peripheral face, and for each of these circumferential positions, the arithmetic mean roughness $Ra_1$ and the protruding peak height $Rpk_1$ of the outer peripheral face were measured at two measurement points which differed in position in the axial direction. Furthermore, an evaluation length at each of the measurement points was set to 4 mm. Measurement conditions of the arithmetic mean roughness $Ra_1$ were set as follows: a measurement force was 0.75 mN, a radius of a measuring element was 2 $\mu$m, a high-frequency cut-off value ($\lambda$c) was 0.8 mm, and a low-frequency cut-off value ($\lambda$s) was 2.5 $\mu$m. FIG. 3 shows measurement results of the arithmetic mean roughness $Ra_1$, and FIG. 4 shows measurement results of the protruding peak height $Rpk_1$. It is to be noted that in FIGs. 3 and 4, each dot represents an average value, and a corresponding error bar represents an error range with respect to the average value.
As shown in FIG. 3, when the grit number of the sandpaper is greater than or equal to 150, the arithmetic mean roughness $Ra_1$ is reduced to a range of greater than or equal to 0.05 $\mu$m and less than or equal to 0.30 $\mu$m. Furthermore, when the grit number of the sandpaper is greater than or equal to 200, the arithmetic mean roughness $Ra_1$ converges to a range of greater than equal to 0.05 $\mu$m and less than or equal to 0.20 $\mu$m. Meanwhile, as shown in FIG. 4, when the grit number of the sandpaper is greater than or equal to 150, the protruding peak height $Rpk_1$ of the outer peripheral face of the shaft member is reduced to a range of greater than or equal to 0.04 $\mu$m and less than or equal to 0.34 $\mu$m. Furthermore, when the grit number of the sandpaper is greater than or equal to 200, the protruding peak height $Rpk_1$ of the outer peripheral face of the shaft member converges to a range of greater than or equal to 0.04 $\mu$m and less than or equal to 0.26 $\mu$m. In other words, in manufacture of the shaft member including manual polishing, it is considered that in the case in which the arithmetic mean roughness $Ra_1$ and the protruding peak height $Rpk_1$ of the outer peripheral face of the shaft member fall within the above ranges, the surface roughness of the shaft member is reduced to near the limit. Therefore, it is considered that, owing to the arithmetic mean roughness $Ra_1$ and the protruding peak height $Rpk_1$ of the outer peripheral face of the shaft member falling within the above ranges, the frictional resistance and the seizure between the shaft member and the bearing member can be inhibited.

Sliding Test

In the sliding test, the shaft member was rotated under the following conditions of No. 1 to No. 106 by using an apparatus A (a frictional wear tester available from Chihoda-Seiko Co., Ltd.), an apparatus B (a bearing lifetime tester available from Chihoda-Seiko Co., Ltd.), and an apparatus C (a frictional wear tester available from KOBELCO MACHINERY ENGINEERING Co., Ltd.). As the shaft member, a shaft member with a manually polished outer peripheral face was used. In the apparatus A, the shaft member was rotated while, for No. 29 to No. 38, the inner peripheral face of the bearing member which surrounded the outer peripheral face of the shaft member in a range of approximately 90 deg, and for No. 13 to No. 26 and No. 39 to No. 106, the bearing member having a plate-like shape was pressed against the shaft member with a constant load. In the apparatus B and the apparatus C, the shaft member was rotated while the inner peripheral face of the bearing member which surrounded the entire periphery of the outer peripheral face of the shaft member was pressed against the shaft member with a constant load. Furthermore, with regard to each of No. 1 to No. 106, the hardnesses of the shaft member and the bearing member as well as the arithmetic mean roughnesses and the protruding peak heights of the shaft member and the bearing member before and after the sliding test were measured. Tables 1 to 5 show measurement results of No. 1 to No. 106. It is to be noted that in Tables 1 to 5, $Ra_{1A}$ denotes the arithmetic mean roughness of the shaft member before the sliding test, $Ra_{1B}$ denotes the arithmetic mean roughness of the shaft member after the sliding test, $Ra_{2A}$ denotes the arithmetic mean roughness of the bearing member before the sliding test, and $Ra_{2B}$ denotes the arithmetic mean roughness of the bearing member after the sliding test. Furthermore, in Tables 1 to 5, $Rpk_{1A}$ denotes the protruding peak height of the shaft member before the sliding test, $Rpk_{1B}$ denotes the protruding peak height of the shaft member after the sliding test, $Rpk_{2A}$ denotes the protruding peak height of the bearing member before the sliding test, and $Rpk_{2B}$ denotes the protruding peak height of the bearing member after the sliding test. Furthermore, "Hardness ratio", "Ratio of arithmetic mean roughnesses", and "Ratio of protruding peak heights" shown in Tables 1 to 5 are values calculated to 4 significant digits. It is to be noted that in the sliding test, the hardness was measured using a Vickers hardness meter ("FV-310"), available from FUTURE-TECH CORP., for shaft members of No. 1 to No. 28 and bearing members of No. 13 to No. 26, using a Vickers hardness meter ("MVK-E"), available from Akashi Seisakusho, Ltd., for bearing members of No. 1 to No. 12, No. 27, and No. 28, and using a Vickers hardness meter ("AVK"), available from Akashi Seisakusho, Ltd., for shaft members and bearing members of No. 29 to No. 106. Furthermore, the arithmetic mean roughness and the protruding peak height were measured using the portable surface roughness measurement instrument ("SJ-310"), available from Mitutuyo Corporation, for the shaft members and the bearing members of No. 1 to No. 28, and using a portable surface roughness measurement instrument ("SJ-210"), available from Mitutuyo Corporation, for the shaft members and the bearing members of No. 29 to No. 106. Furthermore, in the measurement of the arithmetic mean roughness and the protruding peak height, the evaluation length was set to 4 mm for No. 1 to No. 28, and the evaluation length was set to 12.5 mm for No. 29 to No. 106. Measurement conditions of the arithmetic mean roughness were set as follows: for No. 1 to No. 28, the measurement force was 0.75 mN, the radius of the measuring element was 2 $\mu$m, the high-frequency cut-off value ($\lambda$c) was 0.8 mm, and the low-frequency cut-off value ($\lambda$s) was 2.5 $\mu$m; and for No. 29 to No. 106, the measurement force was 4 mN, the radius of the measuring element was 5 $\mu$m, the high-frequency cut-off value ($\lambda$c) was 2.5 mm, and the low-frequency cut-off value ($\lambda$s) was 8 $\mu$m.

No. 1 to No. 3

For No. 1 to No. 3, the load from the bearing member to the shaft member was set to 10 kN. The rotation frequency of the shaft member was decreased in stages by 250 rpm at intervals of 10 minutes from an initial rotation frequency of 3,000 rpm to a minimum rotation frequency of 250 rpm. Manganese steel was used as the shaft member, and white metal of WJ1 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at an initial temperature of 70 °C and was circulated while the sliding area was immersed in the lubricating oil.

No. 4 to No. 12

For No. 4 to No. 12, the rotation frequency of the shaft member was set to a constant value of 3,500 rpm. The load from the bearing member to the shaft member was increased in stages by 0.5 kN at intervals of 5 minutes from an initial load of 0 kN to a maximum of 20 kN. Manganese steel was used as the shaft member, and white metal corresponding to WJ1 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at the initial temperature of 70 °C and was circulated in the sliding area.

No. 13 to No. 17

With regard to No. 13 to No. 17, the rotation frequency of the shaft member was set to 400 rpm for No. 13, 200 rpm for No. 14, 100 rpm for No. 15, 50 rpm for No. 16, and 800 rpm for No. 17. The load from the bearing member to the shaft member was increased in stages by 0.1 kN at intervals of 1 minute from an initial load of 0 kN, to 1 kN. Steel of S45C as defined in JIS-G4051 (2016) was used as the shaft member, and white metal of WJ2 as defined in JIS-H5401 (1958) was used as the bearing member. As the lubricating oil, "FBK oil RO32", available from ENEOS Corporation, was used. The lubricating oil was supplied to the sliding area between the outer peripheral face of the shaft member and the inner peripheral face of the bearing member at room temperature and was circulated in the sliding area.

No. 18 and No. 25

For No. 18 and No. 25, the rotation frequency of the shaft member and the load from the bearing member to the shaft member were kept at constant values of 50 rpm and 1 kN, respectively, and the shaft member was rotated for 240 minutes. For No. 18 and No. 25, a shaft member and a bearing member similar to those of No. 13 to No. 17 except for the hardness and the surface roughness were used. Furthermore, the same lubricating oil as in No. 13 to No. 17 was used and circulated as in No. 13 to No. 17.

No. 19 and No. 26

For No. 19 and No. 26, the rotation frequency of the shaft member and the load from the bearing member to the shaft member were kept at constant values of 100 rpm and 1 kN, respectively, and the shaft member was rotated for 240 minutes. For No. 19 and No. 26, a shaft member and a bearing member similar to those of No. 13 to No. 17 except for the hardness and the surface roughness were used. Furthermore, the lubricating oil was the same as in No. 13 to No. 17. The lubricating oil was only dropped once onto the sliding area between the outer peripheral face of the shaft member and the inner peripheral face of the bearing member at room temperature at the start of the sliding test.

No. 20 to No. 24

With regard to No. 20 to No. 24, the rotation frequency of the shaft member was set to 400 rpm for No. 20, 200 rpm for No. 21, 100 rpm for No. 22, 50 rpm for No. 23, and 800 rpm for No. 24. Driving conditions of No. 20 to No. 24 were similar to those of No. 13 to No. 17 except for the rotation frequency of the shaft member. For No. 20 to No. 24, a shaft member and a bearing member similar to those of No. 13 to No. 17 except for the hardness and the surface roughness were used. Furthermore, the same lubricating oil as in No. 13 to No. 17 was used and circulated as in No. 13 to No. 17.

No. 27 and No. 28

Driving conditions of No. 27 and No. 28 were similar to those of No. 1 to No. 3 except that the rotation frequency of the shaft member was decreased at intervals of 1 minute. For No. 27 and No. 28, nickel-chromium-molybdenum alloy steel was used as the shaft member, and a bearing member similar to that of No. 1 to No. 3 except for the hardness and the surface roughness was used. Furthermore, the same lubricating oil as in No. 1 to No. 3 was used and circulated as in No. 1 to No. 3.

No. 29 to No. 38

With regard to No. 29 to No. 38, the rotation frequency of the shaft member was set to 200 rpm for No. 29, 800 rpm for No. 30, 100 rpm for No. 31, 200 rpm for No. 32, 800 rpm for No. 33, 200 rpm for No. 34, 800 rpm for No. 35, 100 rpm for No. 36, 200 rpm for No. 37, and 800 rpm for No. 38. The load from the bearing member to the shaft member was increased in stages by 0.1 kN at intervals of 1 minute from the initial load of 0 kN, to 1 kN. Steel of S45C as defined in JIS-G4051 (2016) was used as the shaft member, and white metal of WJ2 as defined in JIS-H5401 (1958) was used as the bearing member. As the lubricating oil, "FBK oil RO100", available from ENEOS Corporation, was used for No. 29, No. 30, No. 34, and No. 35, and "FBK oil RO32", available from ENEOS Corporation, was used for No. 31 to No. 33 and No. 36 to No. 38. The lubricating oil was only dropped once onto the sliding area between the outer peripheral face of the shaft member and the inner peripheral face of the bearing member at room temperature at the start of the sliding test.

For No. 29 to No. 38, a temperature [°C] was measured with a thermocouple equipped at a depth of 2 mm from a surface of the bearing member, and the temperature was determined as a temperature of the lubricating oil. Furthermore, for No. 29 to No. 38, a frictional force at a time of rotation of the shaft member was measured with a load cell attached to a holder which held the bearing member, and a friction coefficient $\mu$ was determined by dividing the frictional force by the load applied. These measurement values were used for evaluation of the fluid lubrication state and calculation of the oil film thickness, as described later.

No. 39 to No. 42

For No. 39 to No. 42, the rotation frequency of the shaft member and the load from the bearing member to the shaft member were kept at constant values of 100 rpm and 1 kN, respectively, and the shaft member was rotated for a maximum of 900 minutes. It is to be noted that, due to restrictions of the apparatus, in a case in which the frictional force measured with the load cell attached to the holder which held the bearing member reached greater than or equal to approximately 294 kN, or in a case in which the temperature measured with the thermocouple equipped at the depth of 2 mm from the surface of the bearing member reached greater than or equal to 100 °C, the test was stopped at that point in time. Steel of S45C as defined in JIS-G4051 (2016) was used as the shaft member, and white metal of WJ2 as defined in JIS-H5401 (1958) was used as the bearing member. As the lubricating oil, "FBK oil RO32", available from ENEOS Corporation, was used. The lubricating oil was only dropped once onto the sliding area between the outer peripheral face of the shaft member and the inner peripheral face of the bearing member at 20 °C at the start of the sliding test.

No. 43 to No. 45

With regard to No. 43 to No. 45, the rotation frequency of the shaft member was set to 200 rpm for No. 43 and 100 rpm for No. 44 and No. 45. Furthermore, the load from the bearing member to the shaft member was kept at a constant value 1 kN, and the shaft member was rotated for a maximum of 320 minutes. It is to be noted that, due to restrictions of the apparatus, in the case in which the frictional force measured with the load cell attached to the holder which held the bearing member reached greater than or equal to approximately 294 kN, or in the case in which the temperature measured with the thermocouple equipped at the depth of 2 mm from the surface of the bearing member reached greater than or equal to 100 °C, the test was stopped at that point in time. For No. 43 to No. 45, a shaft member and a bearing member similar to those of No. 39 to No. 42 except for the hardness and the surface roughness were used. Furthermore, the lubricating oil was the same as in No. 39 to No. 42. For No. 43, the lubricating oil was dropped onto the sliding area between the outer peripheral face of the shaft member and the inner peripheral face of the bearing member only once at 20 °C at the start of the sliding test; for No. 44 and No. 45, the lubricating oil was supplied to the sliding area at 20 °C and was circulated while the sliding area was immersed in the lubricating oil.

No. 46 to No. 84

With regard to No. 46 to No. 84, a rotation time of the shaft member was set to 1 minute for No. 46 and No. 65, 5 minutes for No. 47 and No. 66, 10 minutes for No. 48 and No. 67, 20 minutes for No. 49 and No. 68, 30 minutes for No. 50 and No. 69, 40 minutes for No. 51 and No. 70, 50 minutes for No. 52 and No. 71, 60 minutes for No. 53 and No. 72, 90 minutes for No. 54 and No. 73, 120 minutes for No. 55 and No. 74, 151 minutes for No. 56, 150 minutes for No. 75, 180 minutes for No. 57 and No. 76, 240 minutes for No. 58 and No. 77, 360 minutes for No. 59 and No. 78, 480 minutes for No. 60 and No. 79, 600 minutes for No. 61 and No. 80, 720 minutes for No. 81, 840 minutes for No. 62 and No. 82, 1,080 minutes for No. 63 and No. 83, and 1,440 minutes for No. 64 and No. 84. With regard to No. 46 to No. 84, other driving conditions were similar to those of No. 39 to No. 42. For No. 46 to No. 84, a shaft member and a bearing member similar to those of No. 39 to No. 42 except for the hardness and the surface roughness were used. Furthermore, as the lubricating oil, "FBK oil RO32", available from ENEOS Corporation, was used for No. 46 to No. 64, and "FBK oil RO100", available from ENEOS Corporation, was used for No. 65 to No. 84; as in No. 39 to No. 42, the lubricating oil was only dropped once at 20 °C at the start of the sliding test.

No. 85 to No. 91

With regard to No. 85 to No. 91, the rotation frequency of the shaft member was set to 100 rpm for No. 85, 200 rpm for No. 86, 800 rpm for No. 87, 800 rpm for No. 88, 100 rpm for No. 89, 200 rpm for No. 90, and 800 rpm for No. 91. The load from the bearing member to the shaft member was increased in stages by 0.1 kN at intervals of 1 minute from the initial load of 0 kN, to 1 kN. Steel of S45C as defined in JIS-G4051 (2016) was used as the shaft member, and an Al-Sn-Cu alloy (hereinafter, also referred to as an aluminum alloy) with a Sn content of 7.0% by mass and a Cu content of 2.5% by mass was used as the bearing member. As the lubricating oil, "FBK oil RO100", available from ENEOS Corporation, was used. The lubricating oil was only dropped once onto the sliding area between the outer peripheral face of the shaft member and the inner peripheral face of the bearing member at room temperature at the start of the sliding test.

For No. 85 to No. 91, the temperature of the lubricating oil and the friction coefficient $\mu$ were determined as in No. 29 to No. 38. These measurement values were used for the evaluation of the fluid lubrication state and the calculation of the oil film thickness, as described later.

No. 92 to No. 106

With regard to No. 92 to No. 106, the rotation frequency of the shaft member and the load from the bearing member to the shaft member were kept at constant values of 800 rpm and 0.3 kN, respectively, and the rotation time of the shaft member was set to 1 minute for No. 92 and No. 100, 5 minutes for No. 93 and No. 101, 10 minutes for No. 94 and No. 102, 20 minutes for No. 95 and No. 103, 30 minutes for No. 96 and No. 104, 40 minutes for No. 97 and No. 105, 50 minutes for No. 98 and No. 106, and 60 minutes for No. 99. For No. 92 to No. 106, a shaft member and a bearing member similar to those of No. 85 to No. 91 except for the hardness and the surface roughness were used. Furthermore, as the lubricating oil, "FBK oil RU32", available from ENEOS Corporation, was used; as in No. 39 to No. 42, the lubricating oil was only dropped once at 20 °C at the start of the sliding test.

Table 1

| No. | Apparatus | Hardness [HV] | | Hardness ratio $H_1/H_2$ | Arithmetic mean roughness [µm] | | | | Ratio of arithmetic mean roughnesses | | | | Protruding peak height [µm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | $Ra_{1B}/Ra_{1A}$ | $Ra_{2B}/Ra_{2A}$ | $Ra_{2A}/Ra_{1A}$ | $Ra_{2B}/Ra_{1B}$ | shaft member | | bearing member | | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| | | | | | $Ra_{1A}$ before test | $Ra_{1B}$ after test | $Ra_{2A}$ before test | $Ra_{2B}$ after test | | | | | $Rpk_{1A}$ before test | $Rpk_{1B}$ after test | $Rpk_{2A}$ before test | $Rpk_{2B}$ after test | | | | |
| 1 | B | 212.8 | 24.9 | 8.5 | 0.09 | 0.09 | 0.96 | 0.46 | 1.04 | 0.48 | 10.94 | 5.07 | 0.08 | 0.10 | 2.29 | 0.27 | 1.16 | 0.12 | 27.42 | 2.82 |
| 2 | B | 212.8 | 24.9 | 8.5 | 0.21 | 0.20 | 0.92 | 0.18 | 0.98 | 0.20 | 4.44 | 0.90 | 0.19 | 0.19 | 2.19 | 0.17 | 0.98 | 0.08 | 11.53 | 0.91 |
| 3 | B | 212.8 | 24.9 | 8.5 | 0.58 | 0.52 | 0.91 | 0.38 | 0.90 | 0.42 | 1.58 | 0.74 | 0.64 | 0.48 | 2.16 | 0.68 | 0.76 | 0.32 | 3.39 | 1.42 |
| 4 | C | 194.5 | 21.7 | 9.0 | 0.42 | 0.41 | 0.39 | 0.25 | 0.98 | 0.65 | 0.92 | 0.61 | 0.47 | 0.41 | 0.42 | 0.62 | 0.85 | 1.49 | 0.88 | 1.53 |
| 5 | C | 194.5 | 21.7 | 9.0 | 0.42 | 0.41 | 0.39 | 0.24 | 0.97 | 0.61 | 0.92 | 0.58 | 0.29 | 0.27 | 0.42 | 0.27 | 0.92 | 0.65 | 1.42 | 1.00 |
| 6 | C | 194.5 | 21.7 | 9.0 | 0.45 | 0.44 | 0.39 | 0.13 | 0.98 | 0.34 | 0.86 | 0.30 | 0.35 | 0.36 | 0.42 | 0.18 | 1.03 | 0.43 | 1.20 | 0.50 |
| 7 | C | 194.5 | 21.7 | 9.0 | 0.27 | 0.27 | 0.39 | 0.20 | 1.01 | 0.51 | 1.44 | 0.73 | 0.20 | 0.29 | 0.42 | 0.36 | 1.42 | 0.85 | 2.05 | 1.23 |
| 8 | C | 194.5 | 21.7 | 9.0 | 0.16 | 0.16 | 0.39 | 0.31 | 0.97 | 0.79 | 2.43 | 1.99 | 0.13 | 0.15 | 0.42 | 0.45 | 1.09 | 1.08 | 3.12 | 3.08 |
| 9 | C | 194.5 | 21.7 | 9.0 | 0.08 | 0.11 | 0.39 | 0.23 | 1.46 | 0.60 | 5.07 | 2.08 | 0.08 | 0.12 | 0.42 | 0.30 | 1.53 | 0.72 | 5.19 | 2.44 |
| 10 | C | 194.5 | 21.7 | 9.0 | 0.07 | 0.08 | 0.39 | 0.24 | 1.13 | 0.63 | 5.43 | 3.01 | 0.08 | 0.09 | 0.42 | 0.29 | 1.13 | 0.69 | 5.36 | 3.27 |
| 11 | C | 194.5 | 21.7 | 9.0 | 0.31 | 0.32 | 0.39 | 0.23 | 1.04 | 0.58 | 1.27 | 0.71 | 0.13 | 0.21 | 0.42 | 0.20 | 1.56 | 0.49 | 3.11 | 0.97 |
| 12 | C | 194.5 | 21.7 | 9.0 | 0.04 | 0.09 | 0.39 | 0.22 | 1.94 | 0.56 | 8.72 | 2.49 | 0.06 | 0.09 | 0.42 | 0.26 | 1.48 | 0.63 | 7.15 | 3.03 |
| 13 | A | 159 | 29.7 | 5.4 | 0.22 | 0.22 | 1.81 | 0.09 | 0.98 | 0.05 | 8.13 | 0.42 | - | 0.21 | 1.23 | 0.11 | - | 0.09 | - | 0.54 |
| 14 | A | 159 | 29.7 | 5.4 | 0.22 | 0.22 | 1.81 | 0.09 | 0.98 | 0.05 | 8.13 | 0.42 | - | 0.21 | 1.23 | 0.11 | - | 0.09 | - | 0.54 |
| 15 | A | 159 | 29.7 | 5.4 | 0.22 | 0.22 | 1.81 | 0.09 | 0.98 | 0.05 | 8.13 | 0.42 | - | 0.21 | 1.23 | 0.11 | - | 0.09 | - | 0.54 |
| 16 | A | 159 | 29.7 | 5.4 | 0.22 | 0.22 | 1.81 | 0.09 | 0.98 | 0.05 | 8.13 | 0.42 | - | 0.21 | 1.23 | 0.11 | - | 0.09 | - | 0.54 |

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | $Ra_{1B}/Ra_{1A}$ | $Ra_{2B}/Ra_{2A}$ | $Ra_{2A}/Ra_{1A}$ | $Ra_{2B}/Ra_{1B}$ | shaft member | | bearing member | | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| | | | | | $Ra_{1A}$ before test | $Ra_{1B}$ after test | $Ra_{2A}$ before test | $Ra_{2B}$ after test | | | | | $Rpk_{1A}$ before test | $Rpk_{1B}$ after test | $Rpk_{2A}$ before test | $Rpk_{2B}$ after test | | | | |
| 17 | A | 159 | 29.7 | 5.4 | 0.22 | 0.22 | 1.81 | 0.09 | 0.98 | 0.05 | 8.13 | 0.42 | - | 0.21 | 1.23 | 0.11 | | 0.09 | | 0.54 |
| 18 | A | 150 | 29.7 | 5.1 | 0.30 | 0.28 | 1.83 | 0.08 | 0.94 | 0.04 | 6.06 | 0.28 | - | 0.36 | 0.48 | 0.11 | - | 0.23 | | 0.31 |
| 19 | A | 151 | 29.7 | 5.1 | 0.34 | 0.34 | 1.67 | 0.49 | 1.00 | 0.30 | 4.96 | 1.46 | - | 0.28 | 0.61 | 0.57 | - | 0.93 | - | 2.02 |
| 20 | A | 119 | 29.7 | 4.0 | 0.22 | 0.22 | 1.77 | 0.29 | 1.00 | 0.17 | 8.11 | 1.35 | - | 0.24 | 0.42 | 0.99 | - | 2.34 | | 4.11 |
| 21 | A | 119 | 29.7 | 4.0 | 0.22 | 0.22 | 1.77 | 0.29 | 1.00 | 0.17 | 8.11 | 1.35 | - | 0.24 | 0.42 | 0.99 | - | 2.34 | - | 4.11 |

EP 4 130 500 B1

EP 4 130 500 B1

Table 2

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | $Ra_{1B}/Ra_{1A}$ | $Ra_{2B}/Ra_{2A}$ | $Ra_{2A}/Ra_{1A}$ | $Ra_{2B}/Ra_{1B}$ | shaft member | | bearing member | | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| | | | | | $Ra_{1A}$ before test | $Ra_{1B}$ after test | $Ra_{2A}$ before test | $Ra_{2B}$ after test | | | | | $Rpk_{1A}$ before test | $Rpk_{1B}$ after test | $Rpk_{2A}$ before test | $Rpk_{2B}$ after test | | | | |
| 22 | A | 119 | 29.7 | 4.0 | 0.22 | 0.22 | 1.77 | 0.29 | 1.00 | 0.17 | 8.11 | 1.35 | - | 0.24 | 0.42 | 0.99 | - | 2.34 | - | 4.11 |
| 23 | A | 119 | 29.7 | 4.0 | 0.22 | 0.22 | 1.77 | 0.29 | 1.00 | 0.17 | 8.11 | 1.35 | - | 0.24 | 0.42 | 0.99 | - | 2.34 | - | 4.11 |
| 24 | A | 119 | 29.7 | 4.0 | 0.22 | 0.22 | 1.77 | 0.29 | 1.00 | 0.17 | 8.11 | 1.35 | - | 0.24 | 0.42 | 0.99 | - | 2.34 | - | 4.11 |
| 25 | A | 119 | 29.7 | 4.0 | 0.23 | 0.23 | 1.85 | 0.11 | 0.99 | 0.06 | 8.18 | 0.48 | - | 0.27 | - | 0.13 | - | - | - | 0.49 |
| 26 | A | 119 | 29.7 | 4.0 | 0.37 | 0.33 | 1.59 | 1.24 | 0.90 | 0.78 | 4.34 | 3.74 | - | 0.28 | 0.40 | 0.96 | - | 2.39 | - | 3.39 |
| 27 | B | 277 | 24.9 | 11.1 | 0.26 | 0.24 | 1.20 | 0.31 | 0.94 | 0.26 | 4.63 | 1.28 | 0.40 | 0.26 | 1.37 | 0.19 | 1.52 | 0.14 | 3.42 | 0.71 |

| No. | Apparatus | Hardness [HV] shaft member $H_1$ | Hardness [HV] bearing member $H_2$ | Hardness ratio $H_1/H_2$ | Arithmetic mean roughness [μm] shaft member $Ra_{1A}$ before test | $Ra_{1B}$ after test | bearing member $Ra_{2A}$ before test | $Ra_{2B}$ after test | Ratio of arithmetic mean roughnesses $Ra_{1B}/Ra_{1A}$ | $Ra_{2B}/Ra_{2A}$ | $Ra_{2A}/Ra_{1A}$ | $Ra_{2B}/Ra_{1B}$ | Protruding peak height [μm] shaft member $Rpk_{1A}$ before test | $Rpk_{1B}$ after test | bearing member $Rpk_{2A}$ before test | $Rpk_{2B}$ after test | Ratio of protruding peak heights $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
|---|---|---|---|---|---|---|---|---|---|---|---|---|---|---|---|---|---|---|---|---|
| 28 | B | 277 | 24.9 | 11.1 | 0.07 | 0.06 | 1.23 | 0.30 | 0.88 | 0.24 | 16.81 | 4.66 | 0.07 | 0.07 | 1.55 | 0.46 | 0.93 | 0.30 | 21.58 | 6.85 |
| 29 | A | 242.5 | 27.0 | 9.0 | 0.30 | 0.27 | 0.34 | 0.18 | 0.91 | 0.54 | 1.12 | 0.66 | - | - | 0.48 | - | - | - | - | - |
| 30 | A | 242.5 | 27.0 | 9.0 | 0.30 | 0.27 | 0.34 | 0.18 | 0.91 | 0.54 | 1.12 | 0.66 | - | - | 0.48 | - | - | - | - | - |
| 31 | A | 242.5 | 27.0 | 9.0 | 0.43 | 0.25 | 0.34 | 0.57 | 0.58 | 1.69 | 0.78 | 2.29 | - | - | 0.48 | - | - | - | - | - |
| 32 | A | 242.5 | 27.0 | 9.0 | 0.43 | 0.25 | 0.34 | 0.57 | 0.58 | 1.69 | 0.78 | 2.29 | - | - | 0.48 | - | - | - | - | - |
| 33 | A | 242.5 | 27.0 | 9.0 | 0.43 | 0.25 | 0.34 | 0.57 | 0.58 | 1.69 | 0.78 | 2.29 | - | - | 0.48 | - | - | - | - | - |
| 34 | A | 242.5 | 27.0 | 9.0 | 0.08 | 0.10 | 0.34 | 0.27 | 1.32 | 0.79 | 4.25 | 2.55 | - | - | 0.48 | - | - | - | - | - |
| 35 | A | 242.5 | 27.0 | 9.0 | 0.08 | 0.10 | 0.34 | 0.27 | 1.32 | 0.79 | 4.25 | 2.55 | - | - | 0.48 | - | - | - | - | - |
| 36 | A | 242.5 | 27.0 | 9.0 | 0.07 | 0.10 | 0.34 | 0.29 | 1.49 | 0.86 | 5.01 | 2.90 | - | - | 0.48 | - | - | - | - | - |
| 37 | A | 242.5 | 27.0 | 9.0 | 0.07 | 0.10 | 0.34 | 0.29 | 1.49 | 0.86 | 5.01 | 2.90 | - | - | 0.48 | - | - | - | - | - |
| 38 | A | 242.5 | 27.0 | 9.0 | 0.07 | 0.10 | 0.34 | 0.29 | 1.49 | 0.86 | 5.01 | 2.90 | - | - | 0.48 | - | - | - | - | - |
| 39 | A | 220.5 | 27.0 | 8.2 | 0.31 | 0.22 | 0.55 | 0.27 | 0.72 | 0.49 | 1.76 | 1.19 | 0.23 | 0.16 | 0.97 | 0.37 | 0.67 | 0.38 | 4.14 | 2.36 |
| 40 | A | 220.5 | 27.0 | 8.2 | 0.13 | 0.11 | 0.56 | 0.13 | 0.84 | 0.23 | 4.34 | 1.19 | 0.19 | 0.11 | 0.82 | 0.17 | 0.57 | 0.21 | 4.34 | 1.58 |
| 41 | A | 220.5 | 27.0 | 8.2 | 0.21 | 0.17 | 0.53 | 0.14 | 0.83 | 0.27 | 2.57 | 0.84 | 0.18 | 0.14 | 0.79 | 0.25 | 0.79 | 0.31 | 4.45 | 1.76 |
| 42 | A | 220.5 | 27.0 | 8.2 | 0.06 | 0.09 | 0.57 | 0.13 | 1.65 | 0.22 | 10.27 | 1.37 | 0.06 | 0.11 | 1.56 | 0.18 | 1.78 | 0.11 | 25.97 | 1.65 |

Table 3

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | $Ra_{1B}/Ra_{1A}$ | $Ra_{2B}/Ra_{2A}$ | $Ra_{2A}/Ra_{1A}$ | $Ra_{2B}/Ra_{1B}$ | shaft member | | bearing member | | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| | | | | | $Ra_{1A}$ before test | $Ra_{1B}$ after test | $Ra_{2A}$ before test | $Ra_{2B}$ after test | | | | | $Rpk_{1A}$ before test | $Rpk_{1B}$ after test | $Rpk_{2A}$ before test | $Rpk_{2B}$ after test | | | | |
| 43 | A | 220.5 | 27.0 | 8.2 | 0.32 | 0.20 | 0.52 | 0.30 | 0.63 | 0.57 | 1.65 | 1.51 | 0.30 | 0.21 | 1.49 | 0.56 | 0.68 | 0.38 | 4.94 | 2.74 |
| 44 | A | 220.5 | 27.0 | 8.2 | 0.30 | 0.33 | 1.46 | 0.13 | 1.10 | 0.09 | 4.85 | 0.40 | 0.36 | 0.33 | 0.61 | 0.25 | 0.91 | 0.42 | 1.68 | 0.77 |
| 45 | A | 220.5 | 27.0 | 8.2 | 0.34 | 0.32 | 1.19 | 0.13 | 0.93 | 0.11 | 3.46 | 0.41 | 0.36 | 0.22 | 1.02 | 0.23 | 0.62 | 0.22 | 2.79 | 1.01 |
| 46 | A | 220.5 | 27.0 | 8.2 | 0.33 | 0.31 | 1.50 | 0.17 | 0.94 | 0.12 | 4.53 | 0.55 | 0.30 | 0.25 | 0.79 | 0.30 | 0.84 | 0.38 | 2.61 | 1.20 |
| 47 | A | 220.5 | 27.0 | 8.2 | 0.33 | 0.30 | 1.50 | 0.12 | 0.91 | 0.08 | 4.53 | 0.40 | 0.30 | 0.25 | 0.79 | 0.29 | 0.83 | 0.36 | 2.61 | 1.15 |
| 48 | A | 220.5 | 27.0 | 8.2 | 0.33 | 0.30 | 1.50 | 0.12 | 0.92 | 0.08 | 4.53 | 0.41 | 0.30 | 0.22 | 0.79 | 0.28 | 0.74 | 0.36 | 2.61 | 1.27 |
| 49 | A | 220.5 | 27.0 | 8.2 | 0.33 | 0.30 | 1.50 | 0.16 | 0.92 | 0.10 | 4.53 | 0.52 | 0.30 | 0.29 | 0.79 | 0.27 | 0.95 | 0.34 | 2.61 | 0.94 |
| 50 | A | 220.5 | 27.0 | 8.2 | 0.33 | 0.32 | 1.50 | 0.17 | 0.96 | 0.11 | 4.53 | 0.54 | 0.30 | 0.32 | 0.79 | 0.39 | 1.08 | 0.50 | 2.61 | 1.21 |
| 51 | A | 220.5 | 27.0 | 8.2 | 0.33 | 0.28 | 1.50 | 0.14 | 0.85 | 0.10 | 4.53 | 0.51 | 0.30 | 0.22 | 0.79 | 0.27 | 0.73 | 0.34 | 2.61 | 1.23 |
| 52 | A | 220.5 | 27.0 | 8.2 | 0.33 | 0.29 | 1.50 | 0.16 | 0.86 | 0.10 | 4.53 | 0.55 | 0.30 | 0.23 | 0.79 | 0.36 | 0.78 | 0.46 | 2.61 | 1.55 |
| 53 | A | 220.5 | 27.0 | 8.2 | 0.33 | 0.30 | 1.50 | 0.18 | 0.91 | 0.12 | 4.53 | 0.61 | 0.30 | 0.26 | 0.79 | 0.36 | 0.86 | 0.45 | 2.61 | 1.38 |
| 54 | A | 220.5 | 27.0 | 8.2 | 0.33 | 0.30 | 1.50 | 0.13 | 0.92 | 0.09 | 4.53 | 0.44 | 0.30 | 0.25 | 0.79 | 0.26 | 0.82 | 0.33 | 2.61 | 1.05 |
| 55 | A | 220.5 | 27.0 | 8.2 | 0.33 | 0.30 | 1.50 | 0.19 | 0.89 | 0.13 | 4.53 | 0.65 | 0.30 | 0.21 | 0.79 | 0.46 | 0.71 | 0.59 | 2.61 | 2.17 |
| 56 | A | 220.5 | 27.0 | 8.2 | 0.33 | 0.29 | 1.50 | 0.11 | 0.87 | 0.08 | 4.53 | 0.40 | 0.30 | 0.25 | 0.79 | 0.19 | 0.83 | 0.24 | 2.61 | 0.75 |
| 57 | A | 220.5 | 27.0 | 8.2 | 0.33 | 0.29 | 1.50 | 0.13 | 0.88 | 0.08 | 4.53 | 0.43 | 0.30 | 0.22 | 0.79 | 0.22 | 0.74 | 0.28 | 2.61 | 0.99 |
| 58 | A | 220.5 | 27.0 | 8.2 | 0.33 | 0.28 | 1.50 | 0.13 | 0.86 | 0.09 | 4.53 | 0.45 | 0.30 | 0.22 | 0.79 | 0.24 | 0.73 | 0.31 | 2.61 | 1.12 |

| No. | Apparatus | Hardness [HV] shaft member $H_1$ | Hardness [HV] bearing member $H_2$ | Hardness ratio $H_1/H_2$ | Arithmetic mean roughness [μm] shaft member $Ra_{1A}$ before test | $Ra_{1B}$ after test | bearing member $Ra_{2A}$ before test | $Ra_{2B}$ after test | $Ra_{1B}/Ra_{1A}$ | $Ra_{2B}/Ra_{2A}$ | $Ra_{2A}/Ra_{1A}$ | $Ra_{2B}/Ra_{1B}$ | Protruding peak height [μm] shaft member $Rpk_{1A}$ before test | $Rpk_{1B}$ after test | bearing member $Rpk_{2A}$ before test | $Rpk_{2B}$ after test | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
|---|---|---|---|---|---|---|---|---|---|---|---|---|---|---|---|---|---|---|---|---|
| 59 | A | 220.5 | 27.0 | 8.2 | 0.33 | 0.28 | 1.50 | 0.13 | 0.84 | 0.09 | 4.53 | 0.47 | 0.30 | 0.21 | 0.79 | 0.23 | 0.68 | 0.30 | 2.61 | 1.14 |
| 60 | A | 220.5 | 27.0 | 8.2 | 0.33 | 0.30 | 1.50 | 0.12 | 0.90 | 0.08 | 4.53 | 0.41 | 0.30 | 0.26 | 0.79 | 0.16 | 0.86 | 0.21 | 2.61 | 0.64 |
| 61 | A | 220.5 | 27.0 | 8.2 | 0.33 | 0.28 | 1.50 | 0.14 | 0.83 | 0.09 | 4.53 | 0.50 | 0.30 | 0.23 | 0.79 | 0.29 | 0.75 | 0.36 | 2.61 | 1.27 |
| 62 | A | 220.5 | 27.0 | 8.2 | 0.33 | 0.30 | 1.50 | 0.13 | 0.89 | 0.09 | 4.53 | 0.43 | 0.30 | 0.24 | 0.79 | 0.18 | 0.79 | 0.23 | 2.61 | 0.75 |
| 63 | A | 220.5 | 27.0 | 8.2 | 0.33 | 0.31 | 1.50 | 0.16 | 0.93 | 0.10 | 4.53 | 0.50 | 0.30 | 0.32 | 0.79 | 0.33 | 1.06 | 0.42 | 2.61 | 1.03 |

Table 4

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | | | | | shaft member | | bearing member | | | | | |
| | | | | | $Ra_{1A}$ before test | $Ra_{1B}$ after test | $Ra_{2A}$ before test | $Ra_{2B}$ after test | $Ra_{1B}/Ra_{1A}$ | $Ra_{2B}/Ra_{2A}$ | $Ra_{2A}/Ra_{1A}$ | $Ra_{2B}/Ra_{1B}$ | $Rpk_{1A}$ before test | $Rpk_{1B}$ after test | $Rpk_{2A}$ before test | $Rpk_{2B}$ after test | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| 64 | A | 220.5 | 27.0 | 8.2 | 0.33 | 0.33 | 1.50 | 0.16 | 0.99 | 0.11 | 4.53 | 0.49 | 0.30 | 0.43 | 0.79 | 0.35 | 1.43 | 0.44 | 2.61 | 0.81 |
| 65 | A | 220.5 | 27.0 | 8.2 | 0.07 | 0.07 | 1.58 | 0.19 | 1.01 | 0.12 | 22.61 | 2.65 | 0.10 | 0.09 | 1.15 | 0.24 | 0.90 | 0.21 | 11.84 | 2.70 |
| 66 | A | 220.5 | 27.0 | 8.2 | 0.07 | 0.08 | 1.58 | 0.24 | 1.11 | 0.15 | 22.61 | 3.12 | 0.10 | 0.07 | 1.15 | 0.54 | 0.72 | 0.47 | 11.84 | 7.64 |
| 67 | A | 220.5 | 27.0 | 8.2 | 0.07 | 0.08 | 1.58 | 0.23 | 1.12 | 0.15 | 22.61 | 2.95 | 0.10 | 0.11 | 1.15 | 0.45 | 1.16 | 0.40 | 11.84 | 4.01 |
| 68 | A | 220.5 | 27.0 | 8.2 | 0.07 | 0.09 | 1.58 | 0.22 | 1.23 | 0.14 | 22.61 | 2.50 | 0.10 | 0.13 | 1.15 | 0.41 | 1.38 | 0.36 | 11.84 | 3.08 |
| 69 | A | 220.5 | 27.0 | 8.2 | 0.07 | 0.08 | 1.58 | 0.22 | 1.18 | 0.14 | 22.61 | 2.61 | 0.10 | 0.11 | 1.15 | 0.39 | 1.16 | 0.34 | 11.84 | 3.47 |

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | $Ra_{1B}/Ra_{1A}$ | $Ra_{2B}/Ra_{2A}$ | $Ra_{2A}/Ra_{1A}$ | $Ra_{2B}/Ra_{1B}$ | shaft member | | bearing member | | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| | | | | | $Ra_{1A}$ before test | $Ra_{1B}$ after test | $Ra_{2A}$ before test | $Ra_{2B}$ after test | | | | | $Rpk_{1A}$ before test | $Rpk_{1B}$ after test | $Rpk_{2A}$ before test | $Rpk_{2B}$ after test | | | | |
| 70 | A | 220.5 | 27.0 | 8.2 | 0.07 | 0.08 | 1.58 | 0.26 | 1.09 | 0.16 | 22.61 | 3.35 | 0.10 | 0.11 | 1.15 | 0.31 | 1.17 | 0.27 | 11.84 | 2.71 |
| 71 | A | 220.5 | 27.0 | 8.2 | 0.07 | 0.08 | 1.58 | 0.27 | 1.16 | 0.17 | 22.61 | 3.25 | 0.10 | 0.09 | 1.15 | 0.35 | 0.95 | 0.31 | 11.84 | 3.82 |
| 72 | A | 220.5 | 27.0 | 8.2 | 0.07 | 0.08 | 1.58 | 0.23 | 1.08 | 0.15 | 22.61 | 3.06 | 0.10 | 0.07 | 1.15 | 0.42 | 0.75 | 0.36 | 11.84 | 5.70 |
| 73 | A | 220.5 | 27.0 | 8.2 | 0.07 | 0.07 | 1.58 | 0.23 | 0.99 | 0.14 | 22.61 | 3.27 | 0.10 | 0.08 | 1.15 | 0.49 | 0.84 | 0.42 | 11.84 | 5.99 |
| 74 | A | 220.5 | 27.0 | 8.2 | 0.07 | 0.07 | 1.58 | 0.21 | 1.05 | 0.13 | 22.61 | 2.86 | 0.10 | 0.08 | 1.15 | 0.27 | 0.80 | 0.23 | 11.84 | 3.46 |
| 75 | A | 220.5 | 27.0 | 8.2 | 0.07 | 0.08 | 1.58 | 0.23 | 1.11 | 0.14 | 22.61 | 2.88 | 0.10 | 0.08 | 1.15 | 0.44 | 0.77 | 0.38 | 11.84 | 5.84 |
| 76 | A | 220.5 | 27.0 | 8.2 | 0.07 | 0.09 | 1.58 | 0.23 | 1.23 | 0.15 | 22.61 | 2.71 | 0.10 | 0.10 | 1.15 | 0.37 | 1.05 | 0.32 | 11.84 | 3.60 |
| 77 | A | 220.5 | 27.0 | 8.2 | 0.07 | 0.07 | 1.58 | 0.22 | 1.02 | 0.14 | 22.61 | 3.01 | 0.10 | 0.09 | 1.15 | 0.35 | 0.92 | 0.30 | 11.84 | 3.88 |
| 78 | A | 220.5 | 27.0 | 8.2 | 0.07 | 0.07 | 1.58 | 0.18 | 1.04 | 0.12 | 22.61 | 2.49 | 0.10 | 0.08 | 1.15 | 0.31 | 0.85 | 0.27 | 11.84 | 3.76 |
| 79 | A | 220.5 | 27.0 | 8.2 | 0.07 | 0.08 | 1.58 | 0.18 | 1.20 | 0.12 | 22.61 | 2.17 | 0.10 | 0.11 | 1.15 | 0.43 | 1.18 | 0.38 | 11.84 | 3.76 |
| 80 | A | 220.5 | 27.0 | 8.2 | 0.07 | 0.08 | 1.58 | 0.23 | 1.21 | 0.15 | 22.61 | 2.73 | 0.10 | 0.10 | 1.15 | 0.45 | 1.02 | 0.39 | 11.84 | 4.57 |
| 81 | A | 220.5 | 27.0 | 8.2 | 0.07 | 0.08 | 1.58 | 0.23 | 1.08 | 0.15 | 22.61 | 3.09 | 0.10 | 0.09 | 1.15 | 0.28 | 0.90 | 0.25 | 11.84 | 3.25 |
| 82 | A | 220.5 | 27.0 | 8.2 | 0.07 | 0.08 | 1.58 | 0.29 | 1.09 | 0.18 | 22.61 | 3.79 | 0.10 | 0.08 | 1.15 | 0.51 | 0.86 | 0.44 | 11.84 | 6.11 |
| 83 | A | 220.5 | 27.0 | 8.2 | 0.07 | 0.08 | 1.58 | 0.25 | 1.11 | 0.16 | 22.61 | 3.24 | 0.10 | 0.09 | 1.15 | 0.22 | 0.90 | 0.19 | 11.84 | 2.55 |
| 84 | A | 220.5 | 27.0 | 8.2 | 0.07 | 0.08 | 1.58 | 0.22 | 1.15 | 0.14 | 22.61 | 2.78 | 0.10 | 0.10 | 1.15 | 0.58 | 1.06 | 0.50 | 11.84 | 5.64 |

Table 5

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | | | | | shaft member | | bearing member | | | | | |
| | | | | | $Ra_{1A}$ before test | $Ra_{1B}$ after test | $Ra_{2A}$ before test | $Ra_{2B}$ after test | $Ra_{1B}/Ra_{1A}$ | $Ra_{2B}/Ra_{2A}$ | $Ra_{2A}/Ra_{1A}$ | $Ra_{2B}/Ra_{1B}$ | $Rpk_{1A}$ before test | $Rpk_{1B}$ after test | $Rpk_{2A}$ before test | $Rpk_{2B}$ after test | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| 85 | A | 220.5 | 39.7 | 5.6 | 0.33 | 0.33 | 0.58 | 0.24 | 1.02 | 0.41 | 1.77 | 0.72 | 0.33 | 0.28 | 1.24 | 0.98 | 0.87 | 0.79 | 3.78 | 3.45 |
| 86 | A | 220.5 | 39.7 | 5.6 | 0.33 | 0.33 | 0.58 | 0.24 | 1.02 | 0.41 | 1.77 | 0.72 | 0.33 | 0.28 | 1.24 | 0.98 | 0.87 | 0.79 | 3.78 | 3.45 |
| 87 | A | 220.5 | 39.7 | 5.6 | 0.33 | 0.33 | 0.58 | 0.24 | 1.02 | 0.41 | 1.77 | 0.72 | 0.33 | 0.28 | 1.24 | 0.98 | 0.87 | 0.79 | 3.78 | 3.45 |
| 88 | A | 220.5 | 39.7 | 5.6 | 0.07 | 0.07 | 0.83 | 0.50 | 1.11 | 0.60 | 12.43 | 6.68 | 0.10 | 0.12 | 1.55 | 1.41 | 1.23 | 0.91 | 16.28 | 12.12 |
| 89 | A | 220.5 | 39.7 | 5.6 | 0.06 | 0.06 | 0.57 | 0.25 | 0.95 | 0.44 | 8.99 | 4.13 | 0.07 | 0.06 | 0.98 | 0.35 | 0.79 | 0.36 | 13.47 | 6.09 |
| 90 | A | 220.5 | 39.7 | 5.6 | 0.06 | 0.06 | 0.57 | 0.25 | 0.95 | 0.44 | 8.99 | 4.13 | 0.07 | 0.06 | 0.98 | 0.35 | 0.79 | 0.36 | 13.47 | 6.09 |
| 91 | A | 220.5 | 39.7 | 5.6 | 0.06 | 0.06 | 0.57 | 0.25 | 0.95 | 0.44 | 8.99 | 4.13 | 0.07 | 0.06 | 0.98 | 0.35 | 0.79 | 0.36 | 13.47 | 6.09 |
| 92 | A | 220.5 | 39.7 | 5.6 | 0.31 | 0.29 | 0.74 | 1.02 | 0.94 | 1.38 | 2.42 | 3.55 | 0.28 | 0.32 | 1.66 | 2.73 | 1.14 | 1.64 | 5.97 | 8.58 |
| 93 | A | 220.5 | 39.7 | 5.6 | 0.31 | 0.30 | 0.74 | 0.59 | 0.98 | 0.79 | 2.42 | 1.95 | 0.28 | 0.32 | 1.66 | 2.02 | 1.16 | 1.21 | 5.97 | 6.26 |
| 94 | A | 220.5 | 39.7 | 5.6 | 0.31 | 0.29 | 0.74 | 0.27 | 0.94 | 0.36 | 2.42 | 0.93 | 0.28 | 0.30 | 1.66 | 0.18 | 1.07 | 0.11 | 5.97 | 0.60 |
| 95 | A | 220.5 | 39.7 | 5.6 | 0.31 | 0.29 | 0.74 | 0.25 | 0.95 | 0.34 | 2.42 | 0.85 | 0.28 | 0.27 | 1.66 | 0.18 | 0.98 | 0.11 | 5.97 | 0.66 |
| 96 | A | 220.5 | 39.7 | 5.6 | 0.31 | 0.29 | 0.74 | 0.21 | 0.94 | 0.29 | 2.42 | 0.75 | 0.28 | 0.29 | 1.66 | 0.22 | 1.04 | 0.13 | 5.97 | 0.74 |
| 97 | A | 220.5 | 39.7 | 5.6 | 0.31 | 0.28 | 0.74 | 0.27 | 0.93 | 0.37 | 2.42 | 0.96 | 0.28 | 0.26 | 1.66 | 0.29 | 0.92 | 0.17 | 5.97 | 1.12 |
| 98 | A | 220.5 | 39.7 | 5.6 | 0.31 | 0.29 | 0.74 | 0.33 | 0.95 | 0.45 | 2.42 | 1.14 | 0.28 | 0.24 | 1.66 | 0.61 | 0.85 | 0.36 | 5.97 | 2.56 |
| 99 | A | 220.5 | 39.7 | 5.6 | 0.31 | 0.29 | 0.74 | 0.22 | 0.93 | 0.30 | 2.42 | 0.78 | 0.28 | 0.27 | 1.66 | 0.18 | 0.97 | 0.11 | 5.97 | 0.67 |
| 100 | A | 220.5 | 39.7 | 5.6 | 0.06 | 0.06 | 0.54 | 0.41 | 0.94 | 0.77 | 8.41 | 6.87 | 0.08 | 0.07 | 1.13 | 0.66 | 0.94 | 0.59 | 15.08 | 9.41 |

| No. | Apparatus | Hardness [HV] | | Hardness ratio $H_1/H_2$ | Arithmetic mean roughness [μm] | | | | Ratio of arithmetic mean roughnesses | | | | Protruding peak height [μm] | | | | Ratio of protruding peak heights | | | |
|---|---|---|---|---|---|---|---|---|---|---|---|---|---|---|---|---|---|---|---|---|
| | | shaft member $H_1$ | bearing member $H_2$ | | shaft member | | bearing member | | $Ra_{1B}/Ra_{1A}$ | $Ra_{2B}/Ra_{2A}$ | $Ra_{2A}/Ra_{1A}$ | $Ra_{2B}/Ra1B$ | shaft member | | bearing member | | $Rpk_{1B}/Rpk_{1A}$ | $Rpk_{2B}/Rpk_{2A}$ | $Rpk_{2A}/Rpk_{1A}$ | $Rpk_{2B}/Rpk_{1B}$ |
| | | | | | $Ra_{1A}$ before test | $Ra_{1B}$ after test | $Ra_{2A}$ before test | $Ra_{2B}$ after test | | | | | $Rpk_{1A}$ before test | $Rpk_{1B}$ after test | $Rpk_{2A}$ before test | $Rpk_{2B}$ after test | | | | |
| 101 | A | 220.5 | 39.7 | 5.6 | 0.06 | 0.06 | 0.54 | 0.37 | 0.88 | 0.68 | 8.41 | 6.49 | 0.08 | 0.07 | 1.13 | 0.48 | 0.91 | 0.42 | 15.08 | 7.02 |
| 102 | A | 220.5 | 39.7 | 5.6 | 0.06 | 0.06 | 0.54 | 0.41 | 0.98 | 0.77 | 8.41 | 6.55 | 0.08 | 0.08 | 1.13 | 0.76 | 1.01 | 0.67 | 15.08 | 9.99 |
| 103 | A | 220.5 | 39.7 | 5.6 | 0.06 | 0.07 | 0.54 | 0.27 | 1.04 | 0.51 | 8.41 | 4.11 | 0.08 | 0.06 | 1.13 | 0.16 | 0.79 | 0.14 | 15.08 | 2.64 |
| 104 | A | 220.5 | 39.7 | 5.6 | 0.06 | 0.05 | 0.54 | 0.38 | 0.85 | 0.71 | 8.41 | 7.05 | 0.08 | 0.05 | 1.13 | 0.75 | 0.71 | 0.66 | 15.08 | 14.04 |
| 105 | A | 220.5 | 39.7 | 5.6 | 0.06 | 0.06 | 0.54 | 0.50 | 0.89 | 0.92 | 8.41 | 8.73 | 0.08 | 0.06 | 1.13 | 1.90 | 0.77 | 1.68 | 15.08 | 32.83 |
| 106 | A | 220.5 | 39.7 | 5.6 | 0.06 | 0.06 | 0.54 | 0.50 | 0.99 | 0.93 | 8.41 | 7.90 | 0.08 | 0.07 | 1.13 | 1.59 | 0.92 | 1.40 | 15.08 | 23.01 |

Seizure

Under the conditions of No. 1 to No. 106, no transfer from the shaft member to the bearing member or from the bearing member to the shaft member which would affect the surface roughness measurement after the sliding test was observed. That is to say, after the sliding test, adhesion was not visually confirmed on the outer peripheral face of the shaft member or the inner peripheral face of the bearing member.

Hardness

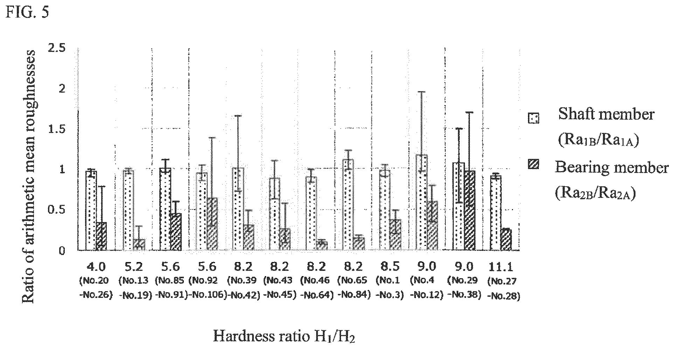

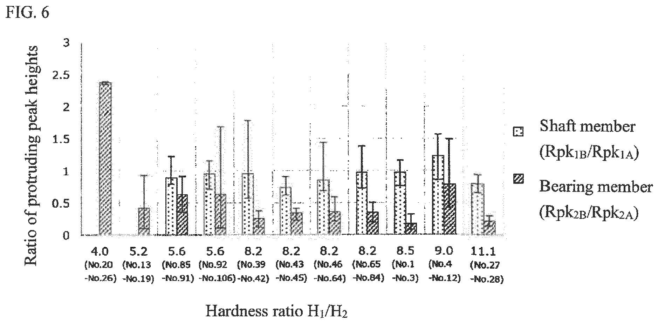

With regard to No. 1 to No. 106, FIG. 5 shows a graph in which the horizontal axis represents the ratio ($H_1/H_2$) of the hardness $H_1$ of the shaft member to the hardness $H_2$ of the bearing member, and the vertical axis represents ratios $Ra_{1B}/Ra_{1A}$ and $Ra_{2B}/Ra_{2A}$ of the arithmetic mean roughnesses. Furthermore, FIG. 6 shows, with regard to No. 1 to No. 12, No. 27, No. 28, and No. 39 to No. 106, a graph in which the horizontal axis represents $H_1/H_2$ and the vertical axis represents a ratio $Rpk_{1B}/Rpk_{1A}$ of the protruding peak heights, and with regard to No. 1 to No. 28 and No. 39 to No. 106, a graph in which the horizontal axis represents $H_1/H_2$ and the vertical axis represents a ratio $Rpk_{2B}/Rpk_{2A}$ of the protruding peak heights. It is to be noted that values of $H_1/H_2$ of No. 13 to No. 19 on the horizontal axes of FIGs. 5 and 6 are average values of values of $H_1/H_2$ of No. 13 to No. 19. Furthermore, each dot in FIGs. 5 and 6 represents an average value, and a corresponding error bar represents an error range with respect to the average value.

As shown in FIGs. 5 and 6, the arithmetic mean roughness and the protruding peak height of the outer peripheral face of the shaft member do not significantly change before and after the sliding test. On the other hand, the arithmetic mean roughness $Ra_2$ of the inner peripheral face of the bearing member tends to decrease after the sliding test ($Ra_{2B}/Ra_{2A}$ < 1). Furthermore, the protruding peak height of the bearing member tends to decrease after the sliding test ($Rpk_{2B}/Rpk_{2A}$ < 1) in a case in which the hardness ratio $H_1/H_2$ is greater than or equal to 4.1. This indicates that by setting the hardness ratio $H_1/H_2$ to be greater than or equal to 4.1, the inner peripheral face of the bearing member is easily polished owing to the sliding with the shaft member.

Ratio of arithmetic mean roughnesses

According to Tables 1 to 4, in the case in which the white metal is used as the bearing member, the arithmetic mean roughness $Ra_{2A}$ of the inner peripheral face of the bearing member before the sliding test is greater than or equal to 0.34 $\mu$m and less than or equal to 1.85 $\mu$m, and the arithmetic mean roughness $Ra_{2B}$ of the inner peripheral face of the bearing member after the sliding test is greater than or equal to 0.08 $\mu$m and less than or equal to 1.24 $\mu$m. Thus, it is considered that before and after the sliding test, the arithmetic mean roughness $Ra_2$ of the inner peripheral face of the bearing member falls within a range of greater than or equal to 0.08 $\mu$m and less than or equal to 1.85 $\mu$m. On the other hand, as described above, in the case in which the surface roughness of the shaft member is reduced to near the limit, it is considered that the arithmetic mean roughness $Ra_1$ of the outer peripheral face of the shaft member can be controlled to be greater than or equal to 0.05 $\mu$m and less than or equal to 0.30 $\mu$m. In view of these matters, it is considered that the ratio ($Ra_2/Ra_1$) of the arithmetic mean roughness $Ra_2$ of the inner peripheral face of the bearing member to the arithmetic mean roughness $Ra_1$ of the outer peripheral face of the shaft member can be controlled to fall within a range in which the lower limit value is 0.27, obtained by dividing 0.08 by 0.30, and the upper limit value is 37.0, obtained by dividing 1.85 by 0.05.

According to Table 5, in the case in which the aluminum alloy is used as the bearing member, the arithmetic mean roughness $Ra_{2A}$ of the inner peripheral face of the bearing member before the sliding test is greater than or equal to 0.54 $\mu$m and less than or equal to 0.83 $\mu$m, and the arithmetic mean roughness $Ra_{2B}$ of the inner peripheral face of the bearing member after the sliding test is greater than or equal to 0.21 $\mu$m and less than or equal to 1.02 $\mu$m. Thus, it is considered that before and after the sliding test, the arithmetic mean roughness $Ra_2$ of the inner peripheral face of the bearing member falls within a range of greater than or equal to 0.21 $\mu$m and less than or equal to 1.02 $\mu$m. On the other hand, as described above, in the case in which the surface roughness of the shaft member is reduced to near the limit, it is considered that the arithmetic mean roughness $Ra_1$ of the outer peripheral face of the shaft member can be controlled to be greater than or equal to 0.05 $\mu$m and less than or equal to 0.30 $\mu$m. In view of these matters, it is considered that the ratio ($Ra_2/Ra_1$) of the arithmetic mean roughness $Ra_2$ of the inner peripheral face of the bearing member to the arithmetic mean roughness $Ra_1$ of the outer peripheral face of the shaft member can be controlled to fall within a range in which the lower limit value is 0.70, obtained by dividing 0.21 by 0.30, and the upper limit value is 20.4, obtained by dividing 1.02 by 0.05.

Accordingly, it is considered that the ratio ($Ra_2/Ra_1$) of the arithmetic mean roughness $Ra_2$ of the inner peripheral face of the bearing member to the arithmetic mean roughness $Ra_1$ of the outer peripheral face of the shaft member can be controlled to fall within the range of greater than or equal to 0.27 and less than or equal to 37.0.

Ratio of protruding peak heights

According to Tables 1 to 4, in the case in which the white metal is used as the bearing member, the protruding peak height $Rpk_{2A}$ of the inner peripheral face of the bearing member before the sliding test is greater than or equal to 0.40 $\mu$m and less than or equal to 2.29 $\mu$m, and the protruding peak height $Rpk_{2B}$ of the inner peripheral face of the bearing member after the sliding test is greater than or equal to 0.11 $\mu$m and less than or equal to 0.99 $\mu$m. Thus, it is considered that before and after the sliding test, the protruding peak height $Rpk_2$ of the inner peripheral face of the bearing member falls within a range of greater than or equal to 0.11 $\mu$m and less than or equal to 2.29 $\mu$m. On the other hand, as described above, in the case in which the surface roughness of the shaft member is reduced to near the limit, it is considered that the protruding peak height $Rpk_1$ of the outer peripheral face of the shaft member can be controlled to be greater than or equal to 0.04 $\mu$m and less than or equal to 0.34 $\mu$m. In view of these matters, it is considered that the ratio ($Rpk_2/Rpk_1$) of the protruding peak height $Rpk_2$ of the inner peripheral face of the bearing member to the protruding peak height $Rpk_1$ of the outer peripheral face of the shaft member can be controlled to fall within a range in which the lower limit value is 0.32, obtained by dividing 0.11 by 0.34, and the upper limit value is 57.3, obtained by dividing 2.29 by 0.04.

According to Table 5, in the case in which the aluminum alloy is used as the bearing member, the protruding peak height $Rpk_{2A}$ of the inner peripheral face of the bearing member before the sliding test is greater than or equal to 0.98 $\mu$m and less than or equal to 1.66 $\mu$m, and the protruding peak height $Rpk_{2B}$ of the inner peripheral face of the bearing member after the sliding test is greater than or equal to 0.16 $\mu$m and less than or equal to 2.73 $\mu$m. Thus, it is considered that before and after the sliding test, the protruding peak height $Rpk_2$ of the inner peripheral face of the bearing member falls within a range of greater than or equal to 0.16 $\mu$m and less than or equal to 2.73 $\mu$m. On the other hand, as described above, in the case in which the surface roughness of the shaft member is reduced to near the limit, it is considered that the protruding peak height $Rpk_1$ of the outer peripheral face of the shaft member can be controlled to be greater than or equal to 0.04 $\mu$m and less than or equal to 0.34 $\mu$m. In view of these matters, it is considered that the ratio ($Rpk_2/Rpk_1$) of the protruding peak height $Rpk_2$ of the inner peripheral face of the bearing member to the protruding peak height $Rpk_1$ of the outer peripheral face of the shaft member can be controlled to fall within a range in which the lower limit value is 0.47, obtained by dividing 0.16 by 0.34, and the upper limit value is 68.3, obtained by dividing 2.73 by 0.04.

Accordingly, it is considered that the ratio ($Rpk_2/Rpk_1$) of the protruding peak height $Rpk_2$ of the inner peripheral face of the bearing member to the protruding peak height $Rpk_1$ of the outer peripheral face of the shaft member can be controlled to fall within a range of greater than or equal to 0.32 and less than or equal to 68.3.

Fluid lubrication state

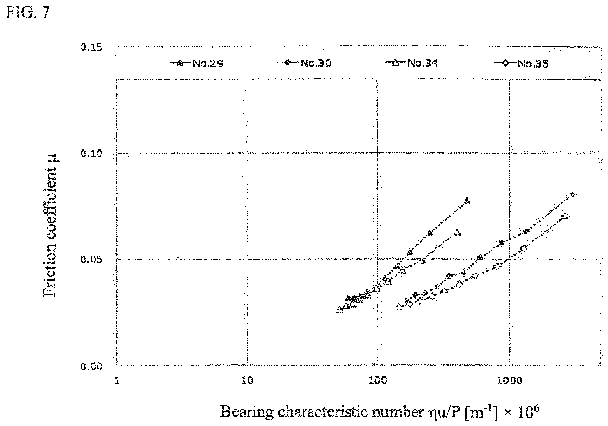

With respect to No. 29 to No. 38 and No. 85 to No. 91, values for respective load conditions were plotted, wherein the horizontal axis represents a bearing characteristic number [$m^{-1}$] calculated from the temperature of the lubricating oil, and the vertical axis represents the friction coefficient. FIGs. 7 to 9 show the results. It is to be noted that the bearing characteristic number is a value calculated as follows: viscosity $\eta$ [Pa·sec] $\times$ peripheral speed u [m/sec] / P(load [N] $\times$ $10^{-6}$). Furthermore, the viscosity $\eta$ was calculated according to the formula 8 by using a known density $\rho$ of the lubricating oil at 15 °C.

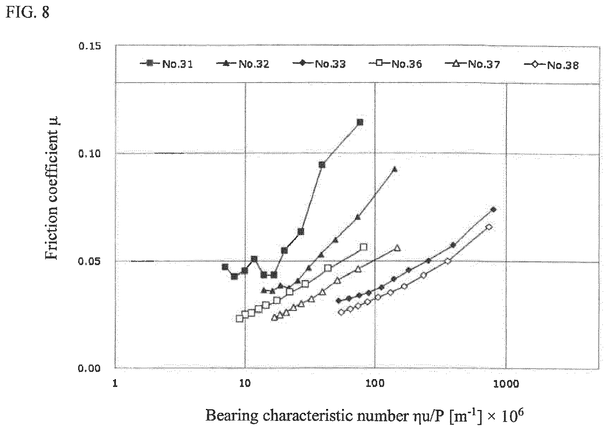

As shown in FIGs. 7 and 8, in No. 31 and No. 32, inflection points are observed in a region in which the bearing characteristic number is small. In other words, in No. 31 and No. 32, it is considered that in a case in which the bearing characteristic number is small, transition from the fluid lubrication state to a mixed lubrication state occurs. On the other hand, it is considered that No. 29, No. 30, and No. 33 to No. 38 are in the fluid lubrication state.

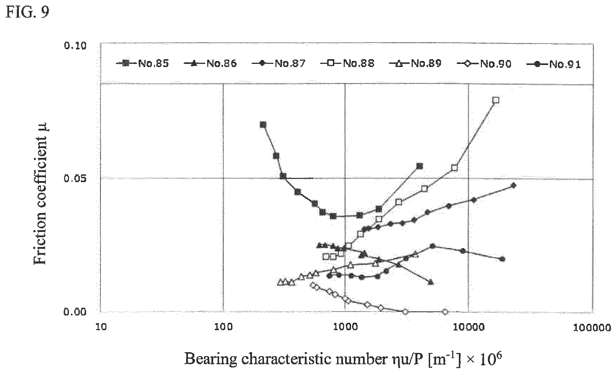

As shown in FIG. 9, an inflection point is observed in No. 85; thus, it is considered that transition from the fluid lubrication state to the mixed lubrication state has occurred. On the other hand, it is considered that No. 86 to No. 91 are in the fluid lubrication state because the friction coefficient remains at a low level regardless of the bearing characteristic number.

Oil film thickness

With regard to No. 29 to No. 38 and No. 85 to No. 91, the oil film thickness h [$\mu$m] was calculated using the above formula 1. Here, the viscosity-pressure coefficient $\alpha$ was determined using the above formula 12. Furthermore, u is obtained by converting the rotation frequency of the shaft member into the unit of m/sec, and w is obtained by dividing the load [N] applied to the shaft member by pressing the bearing member by the width of the inner peripheral face of the bearing member. Table 6 shows the calculation results. It is to be noted that each oil film thickness h shown in Table 6 is a value at a time when the bearing characteristic number is at a minimum.

Limit oil film thickness

With regard to No. 29 to No. 38 and No. 85 to No. 91, the limit oil film thickness $h_{limA}$ [μm] before the sliding test and the limit oil film thickness $h_{limB}$ [μm] after the sliding test were calculated using the above formula 2, wherein the oil film parameter $\Lambda_{lim}$ was set to 3. Table 6 shows the calculation results.

Limit viscosity

With regard to No. 29 to No. 38 and No. 85 to No. 91, according to the above formula 3, the limit viscosity $\eta_{limA}$ before the sliding test was calculated using the limit oil film thickness $h_{limA}$. and the limit viscosity $\eta_{limB}$ after the sliding test was calculated using the limit oil film thickness $h_{limB}$. Table 6 shows the calculation results. It is to be noted that each limit viscosity shown in Table 6 is a value at the time when the bearing characteristic number is at a minimum.

Ratio of viscosity to limit viscosity

With regard to No. 29 to No. 38 and No. 85 to No. 91, a ratio of the viscosity $\eta$ to the limit viscosity was determined. Table 6 shows the results. It is to be noted that the viscosity $\eta$ of the lubricating oil of No. 29 to No. 38 and No. 85 to No. 91 was determined as a product of a known kinematic viscosity of the lubricating oil at 40 °C and a known density thereof at 15 °C, with a state in which the temperature of the lubricating oil is 40 °C as a reference. Furthermore, each "Ratio of viscosity to limit viscosity" shown in Table 6 is a value calculated to 4 significant digits.

Table 6

| No. | Arithmetic mean roughness [μm] | | | | Limit oil film thickness [μm] | | Limit thickness [mPa·sec] | | Viscosity [mPa·sec] | Oil film | | Ratio of viscosity to limit viscosity | |
| | shaft member | | bearing member | | | | | | | | | | |
| | $Ra_{1A}$ before test | $Ra_{1B}$ after test | $Ra_{2A}$ before test | $Ra_{2B}$ after test | $h_{limA}$ before test | $h_{limB}$ after test | $\eta_{limA}$ before test | $\eta_{limB}$ after test | $\eta$ | thickness h [μm] | fluid lubrication state | $\eta/\eta_{limA}$ before test | $\eta/\eta_{limB}$ after test |
|---|---|---|---|---|---|---|---|---|---|---|---|---|---|
| No. 29 | 0.30 | 0.27 | 0.34 | 0.18 | 1.36 | 0.32 | 92.6 | 12.5 | 90.1 | 1.83 | Yes | 0.97 | 7.19 |
| No. 30 | 0.30 | 0.27 | 0.34 | 0.18 | 1.36 | 0.32 | 24.3 | 3.3 | 90.1 | 3.77 | Yes | 3.70 | 27.34 |
| No. 31 | 0.43 | 0.25 | 0.34 | 0.57 | 1.64 | 1.16 | 288.1 | 179.1 | 28.0 | 0.34 | No | 0.10 | 0.16 |
| No. 32 | 0.43 | 0.25 | 0.34 | 0.57 | 1.64 | 1.16 | 146.2 | 90.9 | 28.0 | 0.55 | No | 0.19 | 0.31 |
| No. 33 | 0.43 | 0.25 | 0.34 | 0.57 | 1.64 | 1.16 | 36.7 | 22.8 | 28.0 | 1.46 | Yes | 0.76 | 1.22 |
| No. 34 | 0.08 | 0.10 | 0.34 | 0.27 | 1.05 | 0.25 | 65.8 | 9.2 | 90.1 | 1.63 | Yes | 1.37 | 9.81 |
| No. 35 | 0.08 | 0.10 | 0.34 | 0.27 | 1.05 | 0.25 | 17.4 | 2.4 | 90.1 | 3.37 | Yes | 5.19 | 37.20 |
| No. 36 | 0.07 | 0.10 | 0.34 | 0.29 | 1.04 | 0.28 | 148.1 | 24.8 | 28.0 | 0.42 | Yes | 0.19 | 1.13 |
| No. 37 | 0.07 | 0.10 | 0.34 | 0.29 | 1.04 | 0.28 | 74.9 | 12.5 | 28.0 | 0.65 | Yes | 0.37 | 2.23 |
| No. 38 | 0.07 | 0.10 | 0.34 | 0.29 | 1.04 | 0.28 | 19.5 | 3.3 | 28.0 | 1.51 | Yes | 1.43 | 8.57 |
| No. 85 | 0.33 | 0.33 | 0.58 | 0.24 | 2.00 | 0.51 | 1490.0 | 227.7 | 90.1 | 0.28 | No | 0.06 | 0.40 |
| No. 86 | 0.33 | 0.33 | 0.58 | 0.24 | 2.00 | 0.51 | 703.3 | 107.5 | 90.1 | 0.63 | Yes | 0.13 | 0.84 |
| No. 87 | 0.33 | 0.33 | 0.58 | 0.24 | 2.00 | 0.51 | 190.5 | 29.1 | 90.1 | 1.10 | Yes | 0.47 | 3.09 |

(continued)

| No. | Arithmetic mean roughness [$\mu$m] | | | | Limit oil film thickness [$\mu$m] | | Limit thickness [mPa·sec] | | Viscosity [mPa·sec] | Oil film | | Ratio of viscosity to limit viscosity | |
| --- | --- | --- | --- | --- | --- | --- | --- | --- | --- | --- | --- | --- | --- |
| | shaft member | | bearing member | | | | | | | | | | |
| | $Ra_{1A}$ before test | $Ra_{1B}$ after test | $Ra_{2A}$ before test | $Ra_{2B}$ after test | $h_{limA}$ before test | $h_{limB}$ after test | $\eta_{limA}$ before test | $\eta_{limB}$ after test | $\eta$ | thickness h [$\mu$m] | fluid lubrication state | $\eta/\eta_{limA}$ before test | $\eta/\eta_{limB}$ after test |
| No. 88 | 0.07 | 0.07 | 0.83 | 0.50 | 2.51 | 0.76 | 292.8 | 57.0 | 90.1 | 0.59 | Yes | 0.31 | 1.58 |
| No. 89 | 0.06 | 0.06 | 0.57 | 0.25 | 1.71 | 0.20 | 1132.7 | 58.0 | 90.1 | 0.37 | Yes | 0.08 | 1.55 |
| No. 90 | 0.06 | 0.06 | 0.57 | 0.25 | 1.71 | 0.20 | 575.5 | 29.5 | 90.1 | 0.57 | Yes | 0.16 | 3.06 |
| No. 91 | 0.06 | 0.06 | 0.57 | 0.25 | 1.71 | 0.20 | 172.0 | 8.8 | 90.1 | 0.62 | Yes | 0.52 | 10.23 |

Evaluation of viscosity

As shown in Table 6, in the case in which the white metal is used as the bearing member, No. 29, No. 30, No. 33 to No. 35, No. 37, and No. 38, in which the ratio ($\eta/\eta_{limA}$) of the viscosity $\eta$ to the limit viscosity $\eta_{limA}$ before the sliding test satisfies $0.19 < \eta/\eta_{limA} < 5.20$, are in the fluid lubrication state. On the other hand, No. 31 and No. 32, in which $\eta/\eta_{limA} \leq 0.19$ is satisfied, cannot maintain the fluid lubrication state.

In the case in which the aluminum alloy is used as the bearing member, No. 86 to No. 91, in which the ratio ($\eta/\eta_{limA}$) of the viscosity $\eta$ to the limit viscosity $\eta_{limA}$ before the sliding test satisfies $0.08 \leq \eta/\eta_{limA} < 5.20$, are in the fluid lubrication state. On the other hand, No. 85, in which $\eta/\eta_{limA} < 0.08$ is satisfied, cannot maintain the fluid lubrication state.

INDUSTRIAL APPLICABILITY

The bearing device according to the one aspect of the present invention enables inhibition of the frictional resistance and the seizure between the shaft member and the bearing member, while mixture of impurities and an increase in cost are suppressed, and can be thus applied to a bearing device for a ship.

Explanation of the Reference Symbols

1 Shaft member
11 Outer peripheral face
2 Bearing member
21 Inner peripheral face
3 Lubricating oil
31 Oil film
P Central axis
$R_1$ Radius of outer peripheral face
$R_2$ Radius of inner peripheral face

**Claims**

1.  A bearing device comprising:

    a shaft member having a shaft diameter of greater than or equal to 180 mm;
    a bearing member which slidably supports an outer peripheral face of the shaft member; and
    a lubricating oil which is supplied to a gap between the outer peripheral face of the shaft member and an inner peripheral face of the bearing member and forms an oil film in the gap, wherein
    the shaft member is a crankshaft, an intermediate shaft, or a propulsion shaft for a ship,
    an arithmetic mean roughness $Ra_1$ of the outer peripheral face of the shaft member is greater than or equal to 0.05 $\mu$m and less than or equal to 0.30 $\mu$m, and a protruding peak height $Rpk_1$ of the outer peripheral face is greater than or equal to 0.04 $\mu$m and less than or equal to 0.34 $\mu$m.

2.  The bearing device according to claim 1, wherein in a case in which a hardness of the shaft member is denoted by $H_1$ [HV] and a hardness of the bearing member is denoted by $H_2$ [HV], $H_1/H_2$ is greater than or equal to 4.1.

3.  The bearing device according to claim 1 or 2, wherein in a case in which an arithmetic mean roughness of the inner peripheral face of the bearing member is denoted by $Ra_2$ [$\mu$m] and a protruding peak height of the inner peripheral face of the bearing member is denoted by $Rpk_2$ [$\mu$m], $Ra_2/Ra_1$ is greater than or equal to 0.26 and less than or equal to 38.0, and $Rpk_2/Rpk_1$ is greater than or equal to 0.32 and less than or equal to 69.0.

4.  A method for driving a bearing device comprising:

    a shaft member having a shaft diameter of greater than or equal to 180 mm;
    a bearing member which slidably supports an outer peripheral face of the shaft member; and
    a lubricating oil which is supplied to a gap between the outer peripheral face of the shaft member and an inner peripheral face of the bearing member and forms an oil film in the gap,

the method comprising:

driving by using the bearing device to rotate the shaft member, wherein
the shaft member is a crankshaft, an intermediate shaft, or a propulsion shaft for a ship,
an arithmetic mean roughness $Ra_1$ of the outer peripheral face of the shaft member is greater than or equal to 0.05 $\mu$m and less than or equal to 0.30 $\mu$m, and a protruding peak height $Rpk_1$ of the outer peripheral face is greater than or equal to 0.04 $\mu$m and less than or equal to 0.34 $\mu$m.

5. The method according to claim 4, wherein an oil film thickness h [$\mu$m] calculated according to formula 1 is greater than or equal to a limit oil film thickness $h_{lim}$ [$\mu$m] calculated according to formula 2:

$$h = 1.95R\left(\frac{\alpha\eta u}{R}\right)^{0.73}\left(\frac{w}{ER}\right)^{-0.09} \quad \cdots 1$$

$$h_{lim} = \Lambda_{lim}\sqrt{Ra_1{}^2 + Ra_2{}^2} \quad \cdots 2$$

wherein, in the formula 1, R represents an equivalent radius [m] of the shaft member and the bearing member, $\alpha$ represents a viscosity-pressure coefficient [1/GPa] of the lubricating oil, $\eta$ represents a viscosity [Pa-sec] of the lubricating oil, u represents a peripheral speed [m/sec] of the shaft member, E represents an equivalent longitudinal elastic modulus [GPa] of the shaft member and the bearing member, and w represents a load [N/m] per unit length in an axial direction of the shaft member, the load being applied to the bearing member; and in the formula 2, Aiim represents a value of a minimum oil film parameter at which the oil film maintains a fluid lubrication state, and $Ra_2$ represents an arithmetic mean roughness [$\mu$m] of the inner peripheral face of the bearing member,
the minimum oil film parameter $\Lambda_{lim}$ is 3,
after a parameter b is calculated according to formula 11 by using: a viscosity-temperature characteristic number m calculated according to formula 10 shown in JIS-K2283 (2000) by using a known kinematic viscosity $\mu_1$ of the lubricating oil at a temperature $T_1$ [K] and a known kinematic viscosity $\mu_2$ of the lubricating oil at a temperature $T_2$ [K] ($T_1 < T_2$); and a known kinematic viscosity $\mu_3$ of the lubricating oil at a temperature $T_3$ [K], the viscosity-pressure coefficient $\alpha$ is determined according to formula 12 by using a kinematic viscosity $\mu(T)$ calculated according to formula 9 by using a temperature T [K] of the lubricating oil,

$$m = \{loglog(\mu_1 + 0.7) - loglog(\mu_2 + 0.7)\} / (logT_2 - logT_1) \qquad 10$$

$$b = loglog(\mu_3 + 0.7) + mlogT_3 \qquad 11$$

$$\mu(T) = 10^{10^{(-mlogT+b)}} - 0.7 \quad \cdots 9$$

$$\alpha = m\{0.1657 + 0.2332log\mu(T)\} \times 10 \qquad 12.$$

6. The method according to claim 5, wherein the viscosity $\eta$ of the lubricating oil is greater than or equal to a limit viscosity $\eta_{lim}$ [Pa·sec] of the lubricating oil, calculated according to formula 3:

$$\eta_{lim} = \frac{R}{\alpha u}\left(\frac{\Lambda_{lim}\sqrt{Ra_1{}^2 + Ra_2{}^2}}{1.95R}\right)^{\frac{1}{0.73}}\left(\frac{w}{ER}\right)^{\frac{0.09}{0.73}} \quad \cdots 3$$

7. The method according to claim 5, wherein the peripheral speed u of the shaft member is greater than or equal to a limit peripheral speed $u_{lim}$ [m/sec] of the shaft member, calculated according to formula 4:

$$u_{lim} = \frac{R}{\eta\alpha}\left(\frac{w}{ER}\right)^{\frac{0.09}{0.73}}\left(\frac{\Lambda_{lim}\sqrt{Ra_1{}^2+Ra_2{}^2}}{1.95R}\right)^{\frac{1}{0.73}} \quad \cdots 4$$

8. The method according to claim 5, wherein the equivalent radius R of the shaft member and the bearing member is greater than or equal to a limit equivalent radius $R_{lim}$ [m] of the shaft member and the bearing member, calculated according to formula 5:

$$R_{lim} = \left(\frac{1}{\eta\alpha u}\right)^{\frac{0.73}{0.36}}\left(\frac{w}{E}\right)^{\frac{0.09}{0.36}}\left(\frac{\Lambda_{lim}\sqrt{Ra_1{}^2+Ra_2{}^2}}{1.95}\right)^{\frac{1}{0.36}} \quad \cdots 5$$

9. The method according to claim 4, wherein a viscosity $\eta$ of the lubricating oil satisfies formula 6:

$$0.08 \times \eta_{lim} \leq \eta < 5.20 \times \eta_{lim} \qquad 6$$

wherein, in the formula 6, $\eta_{lim}$ represents a limit viscosity [Pa·sec] of the lubricating oil, calculated according to formula 3, in a case in which an equivalent radius of the shaft member and the bearing member is denoted by R [m], a viscosity-pressure coefficient of the lubricating oil is denoted by $\alpha$ [1/GPa], the viscosity of the lubricating oil is denoted by $\eta$ [Pa sec], a peripheral speed of the shaft member is denoted by u [m/sec], an equivalent longitudinal elastic modulus of the shaft member and the bearing member is denoted by E [GPa], a load per unit length in an axial direction of the shaft member, the load being applied to the bearing member, is denoted by w [N/m], a value of a minimum oil film parameter at which the oil film maintains a fluid lubrication state is denoted by $\Lambda_{lim}$, and an arithmetic mean roughness of the inner peripheral face of the bearing member is denoted by $Ra_2$,

$$\eta_{lim} = \frac{R}{\alpha u}\left(\frac{\Lambda_{lim}\sqrt{Ra_1{}^2+Ra_2{}^2}}{1.95R}\right)^{\frac{1}{0.73}}\left(\frac{w}{ER}\right)^{\frac{0.09}{0.73}} \quad \cdots 3$$

the minimum oil film parameter $\Lambda$lim is 3, after a parameter b is calculated according to formula **11** by using: a viscosity-temperature characteristic number m calculated according to formula **10** shown in JIS-K2283 (2000) by using a known kinematic viscosity $\mu_1$ of the lubricating oil at a temperature $T_1$ [K] and a known kinematic viscosity $\mu_2$ of the lubricating oil at a temperature $T_2$ [K] ($T_1 < T_2$); and a known kinematic viscosity $\mu_3$ of the lubricating oil at a temperature $T_3$ [K], the viscosity-pressure coefficient $\alpha$ is determined according to formula **12** by using a kinematic viscosity $\mu(T)$ calculated according to formula **9** by using a temperature T [K] of the lubricating oil,

$$m = \{loglog(\mu_1 + 0.7) - loglog(\mu_2 + 0.7)\} / (logT_2 - logT_1) \ \mathbf{10}$$

$$b = loglog(\mu_3 + 0.7) + mlogT_3 \ \mathbf{11}$$

$$\mu(T) = 10^{10^{(-mlogT+b)}} - 0.7 \quad \cdots 9$$

$$\alpha = m\{0.1657 + 0.2332log\mu(T)\} \times 10 \ \mathbf{12}.$$

**Patentansprüche**

1. Lagervorrichtung, umfassend:

   ein Wellenelement mit einem Wellendurchmesser von mehr als oder gleich 180 mm;
   ein Lagerelement, das eine äußere Umfangsfläche des Wellenelements gleitend abstützt; und
   ein Schmieröl, das einem Spalt zwischen der äußeren Umfangsfläche des Wellenelements und einer inneren Umfangsfläche des Lagerelements zugeführt wird und einen Ölfilm in dem Spalt bildet, wobei
   das Wellenelement eine Kurbelwelle, eine Zwischenwelle oder eine Antriebswelle für ein Schiff ist,
   ein arithmetisches Mittel der Rauheit $Ra_1$ der äußeren Umfangsfläche des Wellenelements größer als oder gleich 0,05 $\mu$m und kleiner als oder gleich 0,30 $\mu$m ist, und eine vorstehende Peakhöhe $Rpk_1$ der äußeren Umfangsfläche größer als oder gleich 0,04 $\mu$m und kleiner als oder gleich 0,34 $\mu$m ist.

2. Lagervorrichtung nach Anspruch 1, wobei in einem Fall, in dem eine Härte des Wellenelements mit $H_1$ [HV] bezeichnet wird und eine Härte des Lagerelements mit $H_2$ [HV] bezeichnet wird, $H_1/H_2$ größer oder gleich 4,1 ist.

3. Lagervorrichtung nach Anspruch 1 oder 2, wobei in einem Fall, in dem ein arithmetisches Mittel der Rauheit der inneren Umfangsfläche des Lagerelements mit $Ra_2$ [$\mu$m] bezeichnet wird und eine vorstehende Peakhöhe der inneren Umfangsfläche des Lagerelements mit $Rpk_2$ [$\mu$m] bezeichnet wird, $Ra_2/Ra_1$ größer als oder gleich 0,26 und kleiner als oder gleich 38,0 ist und $Rpk_2/Rpk_1$ größer als oder gleich 0,32 und kleiner als oder gleich 69,0 ist.

4. Verfahren zum Antrieb einer Lagervorrichtung, umfassend:

   ein Wellenelement mit einem Wellendurchmesser von mehr als oder gleich 180 mm;
   ein Lagerelement, das eine äußere Umfangsfläche des Wellenelements gleitend abstützt; und
   ein Schmieröl, das einem Spalt zwischen der äußeren Umfangsfläche des Wellenelements und einer inneren Umfangsfläche des Lagerelements zugeführt wird und einen Ölfilm in dem Spalt bildet,
   das Verfahren umfassend:

   Antreiben unter Verwendung der Lagervorrichtung zum Drehen des Wellenelements, wobei
   das Wellenelement eine Kurbelwelle, eine Zwischenwelle oder eine Antriebswelle für ein Schiff ist,
   ein arithmetisches Mittel der Rauheit $Ra_1$ der äußeren Umfangsfläche des Wellenelements größer als oder gleich 0,05 $\mu$m und kleiner als oder gleich 0,30 $\mu$m ist, und eine vorstehende Peakhöhe $Rpk_1$ der äußeren Umfangsfläche größer als oder gleich 0,04 $\mu$m und kleiner als oder gleich 0,34 $\mu$m ist.

5. Verfahren nach Anspruch 4, wobei eine nach Formel 1 berechnete Ölfilmdicke h [$\mu$m] größer als oder gleich einer nach Formel 2 berechneten Grenzölfilmdicke $h_{lim}$ [$\mu$m] ist:

$$h = 1.95R\left(\frac{\alpha\eta u}{R}\right)^{0.73}\left(\frac{w}{ER}\right)^{-0.09} \quad \cdots 1$$

$$h_{lim} = \Lambda_{lim}\sqrt{Ra_1{}^2 + Ra_2{}^2} \quad \cdots 2$$

   wobei in der Formel 1 R einen äquivalenten Radius [m] des Wellenelements und des Lagerelements darstellt, $\alpha$ einen Viskositäts-Druck-Koeffizienten [1/GPa] des Schmieröls darstellt, $\eta$ eine Viskosität [Pa·sec] des Schmieröls darstellt, u eine Umfangsgeschwindigkeit [m/sec] des Wellenelements darstellt, E einen äquivalenten Längselastizitätsmodul [GPa] des Wellenelements und des Lagerelements darstellt, und w eine Belastung [N/m] pro Längeneinheit in einer axialen Richtung des Wellenelements darstellt, wobei die Belastung auf das Lagerelement einwirkt; und in der Formel 2 $\Lambda_{lim}$ einen Wert eines minimalen Ölfilmparameters darstellt, bei dem der Ölfilm einen Flüssigkeitsschmierzustand beibehält, und $Ra_2$ ein arithmetisches Mittel der Rauheit [$\mu$m] der inneren Umfangsfläche des Lagerelements darstellt,
   der minimale Ölfilmparameter $\Lambda_{lim}$ 3 ist,
   nachdem ein Parameter b gemäß Formel 11 berechnet wurde unter Verwendung einer Viskositäts-Temperatur-Kennzahl m, berechnet nach der in JIS-K2283 (2000) dargestellten Formel 10 unter Verwendung einer bekann-

ten kinematischen Viskosität $\mu_1$ des Schmieröls bei einer Temperatur $T_1$ [K] und einer bekannten kinematischen Viskosität $\mu_2$ des Schmieröls bei einer Temperatur $T_2$ [K] ($T_1 < T_2$), und einer bekannten kinematischen Viskosität $\mu_3$ des Schmieröls bei einer Temperatur $T_3$ [K], der Viskositäts-Druck-Koeffizient $\alpha$ gemäß Formel 12 bestimmt wird unter Verwendung einer kinematischen Viskosität $\mu(T)$, die gemäß Formel 9 unter Verwendung einer Temperatur T [K] des Schmieröls berechnet wird,

$$m = \{loglog(\mu_1 + 0{,}7) - loglog(\mu_2 + 0{,}7)\} / (logT_2 - logT_1) \qquad 10$$

$$b = loglog(\mu_3 + 0{,}7) + mlogT_3 \qquad 11$$

$$\mu(T) = 10^{10^{(-mlogT+b)}} - 0.7 \qquad \cdots 9$$

$$\alpha = m\{0{,}1657 + 0{,}2332log\mu(T)\} \times 10 \qquad 12.$$

**6.** Verfahren nach Anspruch 5, wobei die Viskosität $\eta$ des Schmieröls größer oder gleich einer Grenzviskosität $\eta_{lim}$ [Pa·sec] des Schmieröls ist, berechnet nach Formel 3:

$$\eta_{lim} = \frac{R}{\alpha u}\left(\frac{\Lambda_{lim}\sqrt{Ra_1{}^2+Ra_2{}^2}}{1.95R}\right)^{\frac{1}{0.73}}\left(\frac{w}{ER}\right)^{\frac{0.09}{0.73}} \qquad \cdots 3$$

**7.** Verfahren nach Anspruch 5, wobei die Umfangsgeschwindigkeit u des Wellenelements größer oder gleich einer Grenzumfangsgeschwindigkeit $u_{lim}$ [m/sec] des Wellenelements ist, die nach Formel 4 berechnet wird:

$$u_{lim} = \frac{R}{\eta\alpha}\left(\frac{w}{ER}\right)^{\frac{0.09}{0.73}}\left(\frac{\Lambda_{lim}\sqrt{Ra_1{}^2+Ra_2{}^2}}{1.95R}\right)^{\frac{1}{0.73}} \qquad \cdots 4$$

**8.** Verfahren nach Anspruch 5, wobei der äquivalente Radius R des Wellenelements und des Lagerelements größer oder gleich einem äquivalenten Grenzradius $R_{lim}$ [m] des Wellenelements und des Lagerelements ist, der nach Formel 5 berechnet wird:

$$R_{lim} = \left(\frac{1}{\eta\alpha u}\right)^{\frac{0.73}{0.36}}\left(\frac{w}{E}\right)^{\frac{0.09}{0.36}}\left(\frac{\Lambda_{lim}\sqrt{Ra_1{}^2+Ra_2{}^2}}{1.95}\right)^{\frac{1}{0.36}} \qquad \cdots 5$$

**9.** Verfahren nach Anspruch 4, wobei eine Viskosität $\eta$ des Schmieröls die Formel 6 erfüllt:

$$0{,}08 \times \eta_{lim} \leq \eta < 5{,}20 \times \eta_{lim} \qquad 6$$

wobei in der Formel 6 $\eta_{lim}$ eine Grenzviskosität [Pa·sec] des Schmieröls darstellt, die gemäß Formel 3 berechnet wird, in einem Fall in dem ein äquivalenter Radius des Wellenelements und des Lagerelements mit R [m] bezeichnet wird, ein Viskositätsdruckkoeffizient des Schmieröls mit $\alpha$ [1/GPa] bezeichnet wird, die Viskosität des Schmieröls mit $\eta$ [Pa·sec] bezeichnet wird, eine Umfangsgeschwindigkeit des Wellenelements mit u [m/sec] bezeichnet wird, ein äquivalenter longitudinaler Elastizitätsmodul des Wellenelements und des Lagerelements mit E [GPa] bezeichnet wird, eine Last pro Längeneinheit in einer axialen Richtung des Wellenelements, wobei die Last auf das Lagerelement einwirkt, mit w [N/m] bezeichnet wird, ein Wert eines minimalen Ölfilmparameters, bei dem der Ölfilm einen Flüssigkeitsschmierzustand beibehält, mit $\Lambda_{lim}$ bezeichnet wird, und eine arithmetische mittlere Rauheit der inneren Umfangsfläche des Lagerelements mit $Ra_2$ bezeichnet wird,

$$\eta_{lim} = \frac{R}{\alpha u}\left(\frac{\Lambda_{lim}\sqrt{Ra_1{}^2+Ra_2{}^2}}{1.95R}\right)^{\frac{1}{0.73}}\left(\frac{w}{ER}\right)^{\frac{0.09}{0.73}} \quad \cdots 3$$

der minimale Ölfilmparameter $\Lambda_{lim}$ ist 3,
nachdem ein Parameter b gemäß Formel 11 berechnet wurde unter Verwendung einer Viskositäts-Temperatur-Kennzahl m, berechnet nach der in JIS-K2283 (2000) dargestellten Formel 10 unter Verwendung einer bekannten kinematischen Viskosität $\mu_1$ des Schmieröls bei einer Temperatur $T_1$ [K] und einer bekannten kinematischen Viskosität $\mu_2$ des Schmieröls bei einer Temperatur $T_2$ [K] ($T_1 < T_2$), und einer bekannten kinematischen Viskosität $\mu_3$ des Schmieröls bei einer Temperatur $T_3$ [K], der Viskositäts-Druck-Koeffizient $\alpha$ gemäß Formel 12 bestimmt wird unter Verwendung einer kinematischen Viskosität $\mu(T)$, die gemäß Formel 9 unter Verwendung einer Temperatur T [K] des Schmieröls berechnet wird,

$$m = \{loglog(\mu_1 + 0{,}7) - loglog(\mu_2 + 0{,}7)\} / (logT_2 - logT_1) \qquad 10$$

$$b = loglog(\mu_3 + 0{,}7) + mlogT_3 \qquad 11$$

$$\mu(T) = 10^{10^{(-mlogT+b)}} - 0.7 \qquad \cdots 9$$

$$\alpha = m\{0{,}1657 + 0{,}2332log\mu(T)\} \times 10 \qquad 12.$$

## Revendications

1. Dispositif de palier comprenant :

    un élément d'arbre ayant un diamètre d'arbre supérieur ou égal à 180 mm ;
    un élément de palier qui supporte à coulissement une face périphérique externe de l'élément d'arbre ; et
    une huile lubrifiante qui est fournie à un espace entre la face périphérique externe de l'élément d'arbre et une face périphérique interne de l'élément de palier, et forme un film d'huile dans l'espace, dans lequel
    l'élément d'arbre est un vilebrequin, un arbre intermédiaire ou un arbre de propulsion pour un navire,
    une rugosité moyenne arithmétique $Ra_1$ de la face périphérique externe de l'élément d'arbre est supérieure ou égale à 0,05 $\mu$m et inférieure ou égale à 0,30 $\mu$m, et une hauteur de pic saillant $Rpk_1$ de la face périphérique externe est supérieure ou égale à 0,04 $\mu$m et inférieure ou égale à 0,34 $\mu$m.

2. Dispositif de palier selon la revendication 1, dans lequel dans un cas où une dureté de l'élément d'arbre est désignée par $H_1$ [HV] et une dureté de l'élément de palier est désignée par $H_2$ [HV], $H_1/H_2$ est supérieur ou égal à 4,1.

3. Dispositif de palier selon la revendication 1 ou 2, dans lequel dans un cas où une rugosité moyenne arithmétique de la face périphérique interne de l'élément de palier est désignée par $Ra_2$ [$\mu$m] et une hauteur de pic saillant de la face périphérique interne de l'élément de palier est désignée par $Rpk_2$ [$\mu$m], $Ra_2/Ra_1$ est supérieur ou égal à 0,26 et inférieur ou égal à 38,0, et $Rpk_2/Rpk_1$ est supérieur ou égal à 0,32 et inférieur ou égal à 69,0.

4. Procédé d'entraînement d'un dispositif de palier comprenant :

    un élément d'arbre ayant un diamètre d'arbre supérieur ou égal à 180 mm ;
    un élément de palier qui supporte à coulissement une face périphérique externe de l'élément d'arbre ; et

une huile lubrifiante qui est fournie à un espace entre la face périphérique externe de l'élément d'arbre et une face périphérique interne de l'élément de palier, et forme un film d'huile dans l'espace,
le procédé comprenant :

entraîner en utilisant le dispositif de palier pour faire tourner l'élément d'arbre, dans lequel l'élément d'arbre est un vilebrequin, un arbre intermédiaire ou un arbre de propulsion pour un navire, une rugosité moyenne arithmétique $Ra_1$ de la face périphérique externe de l'élément d'arbre est supérieure ou égale à 0,05 $\mu$m et inférieure ou égale à 0,30 $\mu$m, et une hauteur de pic saillant $Rpk_1$ de la face périphérique externe est supérieure ou égale à 0,04 $\mu$m et inférieure ou égale à 0,34 $\mu$m.

5. Procédé selon la revendication 4, dans lequel une épaisseur de film d'huile h [$\mu$m] calculée conformément à la formule 1 est supérieure ou égale à une épaisseur de film d'huile limite $h_{lim}$ [$\mu$m] calculée conformément à la formule 2 :

$$h = 1.95R \left(\frac{\alpha\eta u}{R}\right)^{0.73} \left(\frac{w}{ER}\right)^{-0.09} \cdots 1$$

$$h_{lim} = \Lambda_{lim}\sqrt{Ra_1{}^2 + Ra_2{}^2} \cdots 2$$

dans lesquelles, dans la formule 1, R représente un rayon équivalent [m] de l'élément d'arbre et l'élément de palier, $\alpha$ représente un coefficient de pression de viscosité [1/GPa] de l'huile lubrifiante, $\eta$ représente une viscosité [Pa·s] de l'huile lubrifiante, u représente une vitesse périphérique [m/s] de l'élément d'arbre, E représente un module élastique longitudinal équivalent [GPa] de l'élément d'arbre et l'élément de palier, et w représente une charge [N/m] par longueur unitaire dans une direction axiale de l'élément d'arbre, la charge étant appliquée à l'élément de palier, et dans la formule 2, $\Lambda_{lim}$ représente une valeur d'un paramètre de film d'huile minimal auquel le film d'huile maintient un état de lubrification fluide, et $Ra_2$ représente une rugosité moyenne arithmétique [$\mu$m] de la face périphérique interne de l'élément de palier,
le paramètre de film d'huile minimal $\Lambda_{lim}$ est de 3,
après qu'un paramètre b est calculé conformément à la formule 11 en utilisant : un nombre caractéristique de température de viscosité m calculé conformément à la formule 10 illustré dans JIS-K2283 (2000) en utilisant une viscosité cinématique connue $\mu_1$ de l'huile lubrifiante à une température $T_1$ [K] et une viscosité cinématique connue $\mu_2$ de l'huile lubrifiante à une température $T_2$ [K] ($T_1 < T_2$) ; et une viscosité cinématique connue $\mu_3$ de l'huile lubrifiante à une température $T_3$ [K], le coefficient de pression de viscosité $\alpha$ est déterminé conformément à la formule 12 en utilisant une viscosité cinématique $\mu(T)$ calculée conformément à la formule 9 en utilisant une température T [K] de l'huile lubrifiante,

$$m = \{loglog(\mu_1 + 0{,}7) - loglog(\mu_2 + 0{,}7)\}/(logT_2 - logT_1) \qquad 10$$

$$b = loglog(\mu_3 + 0{,}7) + mlogT_3 \qquad 11$$

$$\mu(T) = 10^{10(-mlogT+b)} - 0{,}7 \qquad 9$$

$$\alpha = m\{0{,}1657 + 0{,}2332log\mu(T)\} \times 10 \qquad 12.$$

6. Procédé selon la revendication 5, dans lequel la viscosité $\eta$ de l'huile lubrifiante est supérieure ou égale à une viscosité limite $\eta_{lim}$ [Pa·s] de l'huile lubrifiante, calculée conformément à la formule 3 :

$$\eta_{\text{lim}} = \frac{R}{\alpha u}\left(\frac{\Lambda_{\text{lim}}\sqrt{\text{Ra}_1{}^2+\text{Ra}_2{}^2}}{1.95R}\right)^{\frac{1}{0.73}}\left(\frac{w}{ER}\right)^{\frac{0.09}{0.73}} \quad \cdots 3$$

7. Procédé selon la revendication 5, dans lequel la vitesse périphérique u de l'élément d'arbre est supérieure ou égale à une vitesse périphérique limite uiim [m/s] de l'élément d'arbre, calculée conformément à la formule 4 :

$$u_{\text{lim}} = \frac{R}{\eta\alpha}\left(\frac{w}{ER}\right)^{\frac{0.09}{0.73}}\left(\frac{\Lambda_{\text{lim}}\sqrt{\text{Ra}_1{}^2+\text{Ra}_2{}^2}}{1.95R}\right)^{\frac{1}{0.73}} \quad \cdots 4$$

8. Procédé selon la revendication 5, dans lequel le rayon équivalent R de l'élément d'arbre et l'élément de palier est supérieur ou égal à un rayon équivalent limite $R_{\text{lim}}$ [m] de l'élément d'arbre et l'élément de palier, calculé conformément à la formule 5 :

$$R_{\text{lim}} = \left(\frac{1}{\eta\alpha u}\right)^{\frac{0.73}{0.36}}\left(\frac{w}{E}\right)^{\frac{0.09}{0.36}}\left(\frac{\Lambda_{\text{lim}}\sqrt{\text{Ra}_1{}^2+\text{Ra}_2{}^2}}{1.95}\right)^{\frac{1}{0.36}} \quad \cdots 5$$

9. Procédé selon la revendication 4, dans lequel une viscosité $\eta$ de l'huile lubrifiante satisfait la formule 6 :

$$0,08 \times \eta_{\text{lim}} \le \eta < 5,20 \times \eta_{\text{lim}} \qquad 6$$

dans laquelle, dans la formule 6, $\eta_{\text{lim}}$ représente une viscosité limite [Pa·s] de l'huile lubrifiante, calculée conformément à la formule 3, dans un cas où un rayon équivalent de l'élément d'arbre et l'élément de palier est désigné par R [m], un coefficient de pression de viscosité de l'huile lubrifiante est désigné par $\alpha$ [1/GPa], la viscosité de l'huile lubrifiante est désignée par $\eta$ [Pa s], une vitesse périphérique de l'élément d'arbre est désignée par u [m/s], un module élastique longitudinal équivalent de l'élément d'arbre et l'élément de palier est désigné par E [GPa], une charge par longueur unitaire dans une direction axiale de l'élément d'arbre, la charge étant appliquée à l'élément de palier, est désignée par w [N/m], une valeur d'un paramètre de film d'huile minimal auquel le film d'huile maintient un état de lubrification fluide est désignée par $\Lambda_{\text{lim}}$, et une rugosité moyenne arithmétique de la face périphérique interne de l'élément de palier est désignée par Raz,

$$\eta_{\text{lim}} = \frac{R}{\alpha u}\left(\frac{\Lambda_{\text{lim}}\sqrt{\text{Ra}_1{}^2+\text{Ra}_2{}^2}}{1.95R}\right)^{\frac{1}{0.73}}\left(\frac{w}{ER}\right)^{\frac{0.09}{0.73}} \quad \cdots 3$$

le paramètre de film d'huile minimal $\Lambda_{\text{lim}}$ est de 3, après qu'un paramètre b est calculé conformément à la formule 11 en utilisant : un nombre caractéristique de température de viscosité m calculé conformément à la formule 10 illustré dans JIS-K2283 (2000) en utilisant une viscosité cinématique connue $\mu_1$ de l'huile lubrifiante à une température $T_1$ [K] et une viscosité cinématique connue $\mu_2$ de l'huile lubrifiante à une température $T_2$ [K] ($T_1 < T_2$) ; et une viscosité cinématique connue $\mu_3$ de l'huile lubrifiante à une température $T_3$ [K], le coefficient de pression de viscosité $\alpha$ est déterminé conformément à la formule 12 en utilisant une viscosité cinématique $\mu(T)$ calculée conformément à la formule 9 en utilisant une température T [K] de l'huile lubrifiante,

$$m = \{\text{loglog}(\mu_1 + 0,7) - \text{loglog}(\mu_2 + 0,7)\}/(\text{log}T_2 - \text{log}T_1) \qquad 10$$

$$b = \text{loglog}(\mu_3 + 0,7) + m\text{log}T_3 \qquad 11$$

$$\mu(T) = 10^{10(-m\text{log}T+b)} - 0,7 \qquad 9$$

$$\alpha = m\{0,1657 + 0,2332\text{log}\mu(T)\} \times 10 \qquad 12.$$

FIG. 1

FIG. 2

FIG. 3

FIG. 4

FIG. 5

FIG. 6

FIG. 7

Bearing characteristic number $\eta u/P$ $[m^{-1}] \times 10^6$

FIG. 8

Bearing characteristic number ηu/P [m⁻¹] × 10⁶

FIG. 9

Bearing characteristic number $\eta u/P \ [m^{-1}] \times 10^6$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017025396 A